# EUROPEAN PATENT APPLICATION

(11) **EP 4 797 610 A1**
(43) Date of publication of application: **26.08.2026**
(21) Application number: 24890838.6
(22) Date of filing: 15.11.2024
(51) Int. Cl.: H04L 9/00

(54) **COMMUNICATION METHOD AND COMMUNICATION APPARATUS**

(30) Priority: 17.11.2023 CN 202311556197
(71) Applicant: HUAWEI TECHNOLOGIES CO., LTD., Shenzhen 518129 (CN)
(72) Inventor: WANG, Donghui, Shenzhen, Guangdong 518129 (CN); SONG, Yurong, Shenzhen, Guangdong 518129 (CN); XIAO, Xun, Shenzhen, Guangdong 518129 (CN); LIU, Fei, Shenzhen, Guangdong 518129 (CN)
(74) Representative: MERH-IP Matias Erny Reichl Hoffmann Patentanwälte PartG mbB
(86) International application number: PCT/CN2024/132445
(87) International publication number: WO 2025/103486

(57) **Abstract**

This application provides a communication method and a communication apparatus capable of enabling service information of a first node to be uploaded to a storage node and applicable to a communication system. The communication method includes: The first node obtains first information, where the first information includes a first identifier and service information corresponding to the first identifier. The first node sends the first information to the storage node.

## Description

This application claims priority to Chinese Patent Application No. 202311556197.2, filed with the China National Intellectual Property Administration on November 17, 2023 and entitled "COMMUNICATION METHOD AND COMMUNICATION APPARATUS", which is incorporated herein by reference in its entirety.

### TECHNICAL FIELD

This application relates to the field of communication technologies, and in particular, to a communication method and a communication apparatus.

### BACKGROUND

In information technology (information technology, IT) or communication technology (communication technology, CT), a node may provide a service to other nodes based on its own service information, or a node's service can be accessed by obtaining its service information. Service information of a node can be obtained either directly from the node itself or from a node that generates the service information. For example, a node corresponding to a card manufacturer or terminal manufacturer may generate service information for a terminal (node), which also stores its own service information. To access a terminal's service, one must obtain the service information of the terminal from either the terminal or the node corresponding to the card manufacturer or terminal manufacturer. In this approach, the procedure of obtaining service information depends on the node that provides the service or the node that generates the service information, thereby limiting the range of application scenarios.

### SUMMARY

Embodiments of this application provide a communication method and a communication apparatus, enabling the procedure of obtaining service information to be independent of a node that provides the service or a node that generates service information, so that it can be applied to a wider range of scenarios.

According to a first aspect, a communication method is provided. The communication method includes: A first node obtains first information. The first information includes a first identifier and service information corresponding to the first identifier. The first node sends the first information to a storage node.

According to the method provided in the first aspect, the first node may send the first identifier and the service information corresponding to the first identifier to the storage node, so that the storage node can obtain the first identifier of the first node and the service information corresponding to the first identifier, and another node can obtain, via the storage node, the service information corresponding to the first identifier. This increases a channel for obtaining the service information, and reduces dependence on the first node. Therefore, the method can be applied to more scenarios.

In a possible implementation, the first node may include one or more of the following: a device corresponding to a card manufacturer or terminal manufacturer, a terminal, a device corresponding to an operator, a device corresponding to an authority, a device corresponding to a trusted third party, or an over-the-air provisioning server. The first node may be determined based on an actual scenario. All the plurality of devices may store identifiers and service information of the devices in the storage node, and therefore, an application scenario is more flexible.

In a possible implementation, if the first node is the device corresponding to the card manufacturer or terminal manufacturer, the method provided in the first aspect further includes: The first node obtains second information. The second information indicates a second identifier of the terminal and credential information corresponding to the second identifier, the credential information corresponding to the second identifier is used to verify the terminal and/or an attribute corresponding to the second identifier, and the second identifier and the credential information corresponding to the second identifier are generated by the first node. The first node sends the second information and/or a hash value of the second information to the storage node.

In this way, the first node (namely, the device corresponding to the card manufacturer or terminal manufacturer) may send the second information to the storage node. Because the service information of the first node is also uploaded to the storage node, and the second identifier and the credential information corresponding to the second identifier are generated by the first node, the first node can endorse the second identifier and the credential information corresponding to the second identifier. For example, the second identifier and the credential information corresponding to the second identifier are signed using a private key corresponding to the first node. Therefore, when the first node is trusted, trustworthiness and interoperability of the second identifier and the credential information corresponding to the second identifier in different fields can be ensured.

In a possible implementation, the credential information corresponding to the second identifier includes authentication information corresponding to the second identifier and/or attestation information corresponding to the second identifier, the authentication information corresponding to the second identifier is used to verify the terminal, and the attestation information corresponding to the second identifier is used to verify the attribute corresponding to the second identifier. In this way, when the credential information corresponding to the second identifier includes the authentication information corresponding to the second identifier, an identity of the terminal can be verified. When the credential information corresponding to the second identifier includes the attestation information corresponding to the second identifier, the attribute corresponding to the second identifier can be verified.

In a possible implementation, the second information includes the second identifier and one or more of the following: the credential information corresponding to the second identifier, service information corresponding to the second identifier, information indicating a type of the terminal, information of an issuer of the second identifier, or information indicating a disclosure condition of the credential information corresponding to the second identifier. In this way, one or more of the foregoing information can be stored in the storage node, so that another device obtains or provides a corresponding service based on the foregoing information in the storage node.

In a possible implementation, the second identifier and the credential information corresponding to the second identifier are carried in identification information corresponding to the second identifier. In this case, the second information may further include profile information, where the profile information includes one or more of the following: the service information corresponding to the second identifier, the information indicating the type of the terminal, the information of the issuer of the second identifier, or the information indicating the disclosure condition of the credential information corresponding to the second identifier. In this way, the identification information of the second identifier includes the credential information for authenticating the terminal, so that the profile information can be generated based on an actual situation, the profile information is more accurate, and an amount of stored data can be reduced. Alternatively, the second identifier is carried in identification information corresponding to the second identifier, and one or more of the following are carried in profile information corresponding to the second identifier: the credential information corresponding to the second identifier, the service information corresponding to the second identifier, the information indicating the type of the terminal, the information of the issuer of the second identifier, or the information indicating the disclosure condition of the credential information corresponding to the second identifier. In this way, the identification information corresponding to the second identifier and other information may be independently stored or separately read, so that information leakage can be reduced, privacy protection is enhanced, and a release manner is more flexible.

In a possible implementation, the identification information corresponding to the second identifier includes a first field and one or both of the following: a second field or a third field, where information carried in the first field indicates the second identifier, information carried in the second field indicates an identifier type of the second identifier, and information carried in the third field is used to check information carried in a field, other than the third field, in the identification information corresponding to the second identifier. In this way, a node corresponding to the second identifier may be indicated by the first field. In addition, when the identification information corresponding to the second identifier includes the second field, a type of the second identifier may be determined, and then, a source, reliability, or an application scenario of the second identifier may be determined based on the second identifier. When the information corresponding to the second identifier includes the third field, another field, for example, the first field, or the first field and the second field, may be checked, to ensure accuracy of the second identifier.

In a possible implementation, the method provided in the first aspect may further include: The first node sends third information to the terminal. The third information indicates the second information, or the third information indicates the second information and a storage location of the second information in a storage system. In this way, the terminal can obtain the second information, so that another node can authenticate the terminal based on the second information.

In a possible implementation, if the first node is the terminal, the method provided in the first aspect may further include: The first node receives fourth information from the device corresponding to the card manufacturer or terminal manufacturer. The fourth information indicates the first identifier and credential information corresponding to the first identifier. Alternatively, the fourth information indicates the first identifier, credential information corresponding to the first identifier, and a storage location of the first identifier and the credential information corresponding to the first identifier in the storage system. In this way, the terminal can obtain the fourth information, and can be authenticated based on the fourth information.

In a possible implementation, the method provided in the first aspect may further include: The first node sends fifth information and/or a hash value of the fifth information to the storage node. The fifth information indicates a third identifier of the first node and credential information corresponding to the third identifier, and the third identifier is different from the first identifier. In this way, the first node may indicate, to the storage node, different identifiers of the first node and credential information corresponding to the different identifiers, so that different services can be used for the different identifiers, thereby improving privacy.

In a possible implementation, if the first node is the terminal, the method provided in the first aspect may further include: The first node sends attestation request information to the device corresponding to the card manufacturer or terminal manufacturer. The attestation request information is used to request attestation information corresponding to the first node, and the attestation information corresponding to the first node is used to verify either the first node or an attribute corresponding to an identifier of the first node. The first node receives the attestation information corresponding to the first node. The attestation information corresponding to the first node is generated by the device corresponding to the card manufacturer or terminal manufacturer. For example, the card manufacturer or the terminal manufacturer can endorse the terminal, and when the card manufacturer or the device manufacturer is trusted, the terminal can be verified based on the attestation information.

In a possible implementation, if the first node is the device corresponding to the card manufacturer or terminal manufacturer, the method provided in the first aspect may further include: The first node receives attestation request information from the terminal. The attestation request information is used to request attestation information corresponding to the terminal, and the attestation information corresponding to the terminal is used to verify the terminal or an attribute corresponding to an identifier of the terminal. The first node sends, to the storage node, the attestation information corresponding to the terminal. The first node sends, to the terminal, the attestation information corresponding to the terminal. In this way, the card manufacturer or the terminal manufacturer can endorse the terminal, and when the card manufacturer or the device manufacturer is trusted, the terminal can be verified based on the attestation information on a blockchain.

According to a second aspect, a communication method is provided. The communication method includes: A storage node receives first information from a first node. The first information includes a first identifier and service information corresponding to the first identifier. The storage node stores the first information.

According to the method provided in the second aspect, the storage node can obtain the first identifier of the first node and the service information corresponding to the first identifier, and another node can obtain, via the storage node, the service information corresponding to the first identifier. This increases a channel for obtaining the service information, and reduces dependence on the first node. Therefore, the method can be applied to more scenarios.

In a possible implementation, the first node may include one or more of the following: a device corresponding to a card manufacturer or terminal manufacturer, a terminal, a device corresponding to an operator, a device corresponding to an authority, a device corresponding to a trusted third party, or an over-the-air provisioning server.

In a possible implementation, if the first node includes the device corresponding to the card manufacturer or terminal manufacturer, the method provided in the second aspect may further include: The storage node receives second information from the first node. The second information indicates a second identifier of the terminal and credential information corresponding to the second identifier. The credential information corresponding to the second identifier is used to verify the terminal and/or an attribute corresponding to the second identifier. The second identifier and the credential information corresponding to the second identifier are generated by the first node. The storage node stores the fourth information.

In a possible implementation, the credential information corresponding to the second identifier includes authentication information corresponding to the second identifier and/or attestation information corresponding to the second identifier, the authentication information corresponding to the second identifier is used to verify the terminal, and the attestation information corresponding to the second identifier is used to verify the attribute corresponding to the second identifier.

In a possible implementation, the second information includes the second identifier and one or more of the following: the credential information corresponding to the second identifier, service information corresponding to the second identifier, information indicating a type of the terminal, information of an issuer of the second identifier, or information indicating a disclosure condition of the credential information corresponding to the second identifier.

In a possible implementation, the second identifier and the credential information corresponding to the second identifier are carried in identification information corresponding to the second identifier. In this case, the second information may further include profile information, where the profile information includes one or more of the following: the service information corresponding to the second identifier, the information indicating the type of the terminal, the information of the issuer of the second identifier, or the information indicating the disclosure condition of the credential information corresponding to the second identifier. In this way, the identification information of the second identifier includes the credential information for authenticating the first node, so that the profile information can be generated based on an actual situation, the profile information is more accurate, and an amount of stored data can be reduced. Alternatively, the second identifier is carried in identification information corresponding to the second identifier, and one or more of the following are carried in profile information corresponding to the second identifier: the credential information corresponding to the second identifier, the service information corresponding to the second identifier, the information indicating the type of the terminal, the information of the issuer of the second identifier, or the information indicating the disclosure condition of the credential information corresponding to the second identifier. In this way, the identification information corresponding to the second identifier and other information may be independently stored or separately read, so that information leakage can be reduced, privacy protection is enhanced, and a release manner is more flexible.

In a possible implementation, the identification information corresponding to the second identifier includes a first field and one or both of the following: a second field or a third field, where information carried in the first field indicates the second identifier, information carried in the second field indicates an identifier type of the second identifier, and information carried in the third field is used to check information carried in a field, other than the third field, in the identification information corresponding to the second identifier.

In a possible implementation, the method provided in the second aspect may further include: The storage node receives fifth information from the first node. The fifth information indicates a third identifier of the first node and credential information corresponding to the third identifier.

In a possible implementation, if the first node includes the device corresponding to the card manufacturer or terminal manufacturer, the method provided in the second aspect may further include: The storage node receives attestation information that corresponds to the terminal and that is from the first node. The attestation information corresponding to the terminal is used to verify the terminal or an attribute corresponding to an identifier of the terminal.

In a possible implementation, the method provided in the second aspect may further include: The storage node receives sixth information from a second node. The sixth information indicates a fourth identifier of the second node and credential information corresponding to the fourth identifier. The credential information corresponding to the fourth identifier is used to verify the second node and/or an attribute corresponding to the fourth identifier. The fourth identifier and the credential information corresponding to the fourth identifier are generated by the first node. The storage node stores the sixth information.

In a possible implementation, the credential information corresponding to the fourth identifier includes authentication information corresponding to the fourth identifier and/or attestation information corresponding to the fourth identifier, the authentication information corresponding to the fourth identifier is used to verify the second node, and the attestation information corresponding to the fourth identifier is used to verify the attribute corresponding to the fourth identifier.

In a possible implementation, the sixth information includes the fourth identifier and one or more of the following: the credential information corresponding to the fourth identifier, service information corresponding to the fourth identifier, information indicating a type of the second node, information of an issuer of the fourth identifier, or information indicating a disclosure condition of the credential information corresponding to the fourth identifier.

In a possible implementation, the fourth identifier and the credential information corresponding to the fourth identifier are carried in identification information corresponding to the fourth identifier. In this way, the identification information of the fourth identifier includes the credential information for authenticating the second node, so that the profile information can be generated based on an actual situation, the profile information is more accurate, and an amount of stored data can be reduced. Alternatively, the fourth identifier is carried in identification information corresponding to the second identifier, and one or more of the following are carried in profile information corresponding to the fourth identifier: the credential information corresponding to the fourth identifier, the service information corresponding to the fourth identifier, the information indicating the type of the second node, the information of the issuer of the fourth identifier, or the information indicating the disclosure condition of the credential information corresponding to the fourth identifier. In this way, the identification information corresponding to the fourth identifier and other information may be independently stored or separately read, so that information leakage can be reduced, privacy protection is enhanced, and a release manner more flexible.

In a possible implementation, the identification information corresponding to the fourth identifier includes a fourth field and one or both of the following: a fifth field or a sixth field, where information carried in the fourth field indicates the fourth identifier, information carried in the fifth field indicates an identifier type of the fourth identifier, and information carried in the sixth field is used to check information carried in a field, other than the sixth field, in the identification information corresponding to the fourth identifier.

For technical effect of the second aspect, refer to the technical effect of the method in the first aspect. Details are not described herein again.

With reference to the solution of the first aspect or the second aspect, in a possible implementation, the service information corresponding to the first identifier is used to generate attestation information of a third node and/or authentication information of the third node; and/or the service information corresponding to the first identifier is used to verify the attestation information of the third node and/or the authentication information of the third node; and/or the service information corresponding to the first identifier is used to provide one or more of the following services for the third node: a subscription service, a network access service, or a data sharing service. The third node is different from the first node, credential information of the third node is used to verify the third node, and the attestation information of the third node is used to verify an attribute corresponding to an identifier of the third node. In this way, content of the service information may be more flexible. For example, the service information may be matched based on a specific application scenario.

In a possible implementation, the first information further indicates credential information corresponding to the first identifier, and the credential information corresponding to the first identifier is used to verify the first node and/or an attribute corresponding to the first identifier.

In a possible implementation, the credential information corresponding to the first identifier includes authentication information corresponding to the first identifier and/or attestation information corresponding to the first identifier, the authentication information corresponding to the first identifier is used to verify the first node, and the attestation information corresponding to the first identifier is used to verify an attribute corresponding to the first node. In this way, the first information stored in the storage node can include the first identifier and the credential information corresponding to the first identifier. Because the first credential information may be used to verify the first identifier or the attribute corresponding to the first identifier, another node can verify the first identifier.

In a possible implementation, the first information includes the first identifier, the service information corresponding to the first identifier, and one or more of the following: information indicating a type of the first node, information of an issuer of the first identifier, or information indicating a disclosure condition of the credential information corresponding to the first identifier. In this way, content of the first information can be more flexible.

In a possible implementation, the first identifier and the credential information corresponding to the first identifier are carried in identification information corresponding to the first identifier. In this way, the identification information of the first identifier includes the credential information for authenticating the first node, so that the profile information can be generated based on an actual situation, the profile information is more accurate, and an amount of stored data can be reduced. Alternatively, the first identifier is carried in identification information corresponding to the first identifier, and one or more of the following are carried in profile information corresponding to the first identifier: the credential information corresponding to the first identifier, the service information corresponding to the first identifier, information indicating the type of the terminal, information of an issuer of the first identifier, or information indicating a disclosure condition of the credential information corresponding to the first identifier. In this way, the identification information corresponding to the first identifier and other information may be independently stored or separately read, so that information leakage can be reduced, privacy protection is enhanced, and a release manner is more flexible.

In a possible implementation, the attestation information corresponding to the first identifier is generated by a fourth node based on service information corresponding to the fourth node, the attestation information corresponding to the first identifier is signed using a private key corresponding to the fourth node, and the fourth node is different from the first node.

In a possible implementation, the service information corresponding to the fourth node is used to generate service result information, the service result information includes credential information of a fifth node, the fifth node is different from the fourth node, and the credential information of the fifth node is used to verify the fifth node and/or an attribute corresponding to an identifier of the fifth node.

In a possible implementation, the identification information corresponding to the first identifier is information signed using a private key that corresponds to an identifier of the first node and that is generated by the card manufacturer or the terminal manufacturer.

In a possible implementation, the storage node is one or more of the following: a blockchain node, a distributed storage node, or a communication device; and the communication device is different from the first node.

According to a third aspect, a communication method is provided. The communication method includes: A second node obtains sixth information. The sixth information indicates a fourth identifier of the second node and credential information corresponding to the fourth identifier. The credential information corresponding to the fourth identifier is used to verify the second node and/or an attribute corresponding to the fourth identifier. The fourth identifier and the credential information corresponding to the fourth identifier are generated by a first node. The second node sends the sixth information and/or a hash value of the sixth information to a storage node.

According to the method provided in the third aspect, the second node may obtain the sixth information and upload the sixth information by itself. This can improve a degree of control of the second node on the identifier and the credential information of the second node.

In a possible implementation, the credential information corresponding to the fourth identifier includes authentication information corresponding to the fourth identifier and/or attestation information corresponding to the fourth identifier, the authentication information corresponding to the fourth identifier is used to verify the second node, and the attestation information corresponding to the fourth identifier is used to verify the attribute corresponding to the fourth identifier.

In a possible implementation, the sixth information includes the fourth identifier and one or more of the following: the credential information corresponding to the fourth identifier, service information corresponding to the fourth identifier, information indicating a type of the second node, information of an issuer of the fourth identifier, or information indicating a disclosure condition of the credential information corresponding to the fourth identifier.

In a possible implementation, the fourth identifier and the credential information corresponding to the fourth identifier are carried in identification information corresponding to the fourth identifier; or the fourth identifier is carried in identification information corresponding to the second identifier, and one or more of the following are carried in profile information corresponding to the fourth identifier: the credential information corresponding to the fourth identifier, the service information corresponding to the fourth identifier, the information indicating the type of the second node, the information of the issuer of the fourth identifier, or the information indicating the disclosure condition of the credential information corresponding to the fourth identifier.

Optionally, the identification information corresponding to the fourth identifier includes a fourth field and one or both of the following: a fifth field or a sixth field, where information carried in the fourth field indicates the fourth identifier, information carried in the fifth field indicates an identifier type of the fourth identifier, and information carried in the sixth field is used to check information carried in a field, other than the sixth field, in the identification information corresponding to the fourth identifier.

In a possible implementation, the storage node is one or more of the following: a blockchain node, a distributed storage node, or a communication device; and the communication device is different from the first node.

According to a fourth aspect, a communication method is provided. The communication method includes: A device corresponding to an operator obtains seventh information. The seventh information indicates a fifth identifier of a terminal and credential information corresponding to the fifth identifier, the credential information corresponding to the fifth identifier is used to verify the terminal and/or an attribute corresponding to the fifth identifier, the fifth identifier is different from a subscription permanent identifier of the terminal in the device corresponding to the operator, the fifth identifier corresponds to the subscription permanent identifier of the terminal, and the subscription permanent identifier is used for communication between the device corresponding to the operator and the terminal. The device corresponding to the operator sends the seventh information to the terminal.

According to the method provided in the fourth aspect, the device corresponding to the operator may generate the fifth identifier of the terminal and the credential information corresponding to the fifth identifier. Because the fifth identifier corresponds to the subscription permanent identifier of the terminal, the device corresponding to the operator may perform centralized management on information about the terminal.

According to a fifth aspect, a communication method is provided. The communication method includes: A terminal receives seventh information from a device corresponding to an operator. The seventh information indicates a fifth identifier of the terminal and credential information corresponding to the fifth identifier, the credential information corresponding to the fifth identifier is used to verify the terminal and/or an attribute corresponding to the fifth identifier, the fifth identifier is different from a subscription permanent identifier of the terminal, the fifth identifier corresponds to the subscription permanent identifier of the terminal, and the subscription permanent identifier is used for communication between the device corresponding to the operator and the terminal. The terminal stores the seventh information.

In addition, for technical effect of the communication method in the fifth aspect, refer to the technical effect of the communication method in the fourth aspect. Details are not described herein again.

In a possible implementation, the credential information corresponding to the fifth identifier includes authentication information corresponding to the fifth identifier and/or attestation information corresponding to the fifth identifier, the authentication information corresponding to the fifth identifier is used to verify the terminal, and the attestation information corresponding to the fifth identifier is used to verify an attribute corresponding to the terminal.

In a possible implementation, the seventh information includes the fifth identifier and one or more of the following: the credential information corresponding to the fifth identifier, the attestation information corresponding to the fifth identifier, information indicating a type of the terminal, information of an issuer of the fifth identifier, or information indicating a disclosure condition of the credential information corresponding to the fifth identifier.

In a possible implementation, the fifth identifier and the credential information corresponding to the fifth identifier are carried in identification information corresponding to the fifth identifier; or one or more of the following are carried in profile information corresponding to the fifth identifier: the credential information corresponding to the fifth identifier, service information corresponding to the fifth identifier, the information indicating the type of the terminal, the information of the issuer of the fifth identifier, or the information indicating the disclosure condition of the credential information corresponding to the fifth identifier.

In a possible implementation, the identification information corresponding to the fifth identifier includes a seventh field and one or both of the following: an eighth field or a ninth field, where information carried in the seventh field indicates the fifth identifier, information carried in the eighth field indicates an identifier type of the fifth identifier, and information carried in the ninth field is used to check information carried in a field, other than the ninth field, in the identification information corresponding to the fifth identifier. In this way, a node corresponding to the fifth identifier may be indicated by the seventh field. In addition, when the identification information corresponding to the fifth identifier includes the eighth field, a type of the fifth identifier may be determined, and then, a source, reliability, or an application scenario of the fifth identifier may be determined based on the fifth identifier. When the information corresponding to the fifth identifier includes the ninth field, another field, for example, the seventh field, or the seventh field and the eighth field, may be checked, to ensure accuracy of the fifth identifier.

According to a sixth aspect, a communication method is provided. The communication method includes: A device corresponding to a card manufacturer or terminal manufacturer obtains eighth information and ninth information. The eighth information includes a seventh identifier indicating the device corresponding to the card manufacturer or terminal manufacturer, and credential information corresponding to the seventh identifier. The credential information corresponding to the seventh identifier is used to verify the device corresponding to the card manufacturer or terminal manufacturer and/or an attribute corresponding to the seventh identifier. The ninth information indicates an eighth identifier of a terminal and credential information corresponding to the eighth identifier. The credential information corresponding to the eighth identifier is used to verify the terminal and/or an attribute corresponding to the eighth identifier. The eighth identifier and the credential information corresponding to the eighth identifier are generated by the device corresponding to the card manufacturer or terminal manufacturer, in other words, the credential information corresponding to the eighth identifier is signed using a private key of the device corresponding to the card manufacturer or terminal manufacturer. The device corresponding to the card manufacturer or terminal manufacturer sends the eighth information and the ninth information to a storage node.

According to the method provided in the sixth aspect, the device corresponding to the card manufacturer or terminal manufacturer may send the eighth information and the ninth information to the storage node, and the eighth identifier and the credential information corresponding to the eighth identifier are generated by the device corresponding to the card manufacturer or terminal manufacturer. In this way, the device corresponding to the card manufacturer or terminal manufacturer can endorse the eighth identifier and the credential information corresponding to the eighth identifier. For example, the credential information corresponding to the eighth identifier is signed using the private key of the device corresponding to the card manufacturer or terminal manufacturer. Therefore, when the device corresponding to the card manufacturer or terminal manufacturer is trusted, trustworthiness and interoperability of the eighth identifier and the credential information corresponding to the eighth identifier in different fields can be ensured.

In a possible implementation, the method provided in the sixth aspect may further include: The device corresponding to the card manufacturer or terminal manufacturer sends the ninth information to the terminal.

According to a seventh aspect, a communication method is provided. The communication method includes: A storage node receives eighth information and ninth information. The eighth information includes a seventh identifier indicating a device corresponding to a card manufacturer or terminal manufacturer, and credential information corresponding to the seventh identifier. The credential information corresponding to the seventh identifier is used to verify the device corresponding to the card manufacturer or terminal manufacturer and/or an attribute corresponding to the seventh identifier. The ninth information indicates an eighth identifier of a terminal and credential information corresponding to the eighth identifier. The credential information corresponding to the eighth identifier is used to verify the terminal and/or an attribute corresponding to the eighth identifier. The eighth identifier and the credential information corresponding to the eighth identifier are generated by the device corresponding to the card manufacturer or terminal manufacturer, in other words, the credential information corresponding to the eighth identifier is signed using a private key of the device corresponding to the card manufacturer or terminal manufacturer. The storage node stores the eighth information and the ninth information.

According to the method provided in the seventh aspect, the storage node may receive the eighth information and the ninth information, and the eighth identifier and the credential information corresponding to the eighth identifier are generated by the device corresponding to the card manufacturer or terminal manufacturer. In this way, the device corresponding to the card manufacturer or terminal manufacturer can endorse the eighth identifier and the credential information corresponding to the eighth identifier. For example, the credential information corresponding to the eighth identifier is signed using the private key of the device corresponding to the card manufacturer or terminal manufacturer. Therefore, when the device corresponding to the card manufacturer or terminal manufacturer is trusted, trustworthiness and interoperability of the eighth identifier and the credential information corresponding to the eighth identifier in different fields can be ensured.

In a possible implementation, that the storage node receives the eighth information and the ninth information includes: The storage node receives the eighth information and the ninth information from the device corresponding to the card manufacturer or terminal manufacturer.

In a possible implementation, that the storage node receives the eighth information and the ninth information includes: The storage node receives the eighth information from the device corresponding to the card manufacturer or terminal manufacturer, and receives the ninth information from the terminal. In some possible examples, the device corresponding to the card manufacturer or terminal manufacturer may be a device that corresponds to the card manufacturer or the terminal manufacturer, and the terminal may be a terminal.

According to an eighth aspect, a communication apparatus is provided. The communication apparatus is configured to perform the communication method in any one of the implementations of the first aspect to the seventh aspect.

In this application, the communication apparatus in the eighth aspect may be a terminal or network device, or may be a chip (system), another part or component, or a software module that may be disposed in the terminal or network device, or may be an apparatus including the terminal or network device.

It should be understood that the communication apparatus in the eighth aspect includes a corresponding module, unit, or means (means) for implementing the communication method in any one of the first aspect to the seventh aspect. The module, unit, or means may be implemented by hardware, software, or hardware executing corresponding software. The hardware or the software includes one or more modules or units configured to perform functions in the foregoing communication method.

According to a ninth aspect, a communication apparatus is provided. The communication apparatus includes a processor. The processor is configured to perform the communication method in any one of the possible implementations of the first aspect to the seventh aspect.

In a possible implementation, the communication apparatus in the ninth aspect may further include a transceiver. The transceiver may be a transceiver circuit or an interface circuit. The transceiver may be used by the communication apparatus in the ninth aspect to communicate with another communication apparatus.

In a possible implementation, the communication apparatus in the ninth aspect may further include a memory. The memory and the processor may be integrated together, or may be disposed separately. The memory may be configured to store a computer program and/or data related to the communication method in any one of the first aspect to the seventh aspect.

The processor is coupled to the memory, and the processor is configured to execute the computer program stored in the memory, so that the communication apparatus performs the communication method in any one of the possible implementations of the first aspect to the seventh aspect.

In this application, the communication apparatus in the ninth aspect may be a first node, a second node, a device corresponding to a card manufacturer or terminal manufacturer, a storage node, a terminal, a device corresponding to a card manufacturer or device manufacturer, or may be a chip (system), another part or component, or a software module that may be disposed in the first node, the second node, the device corresponding to the card manufacturer or terminal manufacturer, the storage node, the terminal, or the device corresponding to the card manufacturer or device manufacturer, or may be an apparatus including the first node, the second node, the device corresponding to the card manufacturer or terminal manufacturer, the storage node, the terminal, or the device corresponding to the card manufacturer or device manufacturer.

According to a tenth aspect, a communication system is provided. The communication system includes one or more terminals and one or more network devices.

According to an eleventh aspect, a computer-readable storage medium is provided, including a computer program or instructions. When the computer program or the instructions are run on a computer, the computer is enabled to perform the communication method in any one of the possible implementations of the first aspect to the seventh aspect.

According to a twelfth aspect, a computer program product is provided, including a computer program or instructions. When the computer program or the instructions are run on a computer, the computer is enabled to perform the communication method in any one of the possible implementations of the first aspect to the seventh aspect.

In addition, for technical effect of the communication apparatuses in the eighth aspect to the twelfth aspect, refer to technical effect of the communication methods in the first aspect to the seventh aspect. Details are not described herein again.

### BRIEF DESCRIPTION OF DRAWINGS

FIG. 1 is a diagram of an architecture of a communication system according to an embodiment of this application;
FIG. 2 is a schematic flowchart 1 of a communication method according to an embodiment of this application;
FIG. 3A and FIG. 3B are diagrams of a structure of a first identifier according to an embodiment of this application;
FIG. 4A and FIG. 4B are a schematic flowchart 2 of a communication method according to an embodiment of this application;
FIG. 5 is a diagram of first information according to an embodiment of this application;
FIG. 6 is a diagram of information stored in a terminal according to an embodiment of this application;
FIG. 7 is a diagram of relationships between different identifiers and profile information of the different identifiers according to an embodiment of this application;
FIG. 8 is a schematic flowchart 3 of a communication method according to an embodiment of this application;
FIG. 9 is a schematic flowchart 4 of a communication method according to an embodiment of this application;
FIG. 10 is a schematic flowchart 5 of a communication method according to an embodiment of this application;
FIG. 11 is a diagram 1 of a structure of a communication apparatus according to an embodiment of this application; and
FIG. 12 is a diagram 2 of a structure of a communication apparatus according to an embodiment of this application.

### DESCRIPTION OF EMBODIMENTS

A user may identify an identity of the user using an identifier, for example, a decentralized identifier (decentralized Identifier, DID) of the user.

In an information technology (information technology, IT) or a communication technology (communication technology, CT), a node may provide a service for another node based on service information corresponding to the node, or a service of a node may be obtained by obtaining service information of the node. The service information of the node may be obtained from the node, or may be obtained from a node that generates the service information of the node. For example, a node corresponding to a card manufacturer or terminal manufacturer may generate service information of (a node) corresponding to a terminal, and the node corresponding to the terminal may also store the service information of the node corresponding to the terminal. Therefore, if a service provided by the terminal needs to be obtained, the service information of the terminal needs to be obtained from the node corresponding to the terminal or the node corresponding to the card manufacturer or terminal manufacturer. In the foregoing solution, service information obtaining needs to depend on the node that provides the service or the node that generates the service information. Consequently, an application scenario is limited.

In addition, in a field or an industry, if the user needs to obtain a service of a merchant, the user needs to first provide identity-related information of the user and register an account with the merchant, and the merchant stores the identity-related information of the user and the account. The user can obtain the service of the merchant based on the registered account and a password of the user. However, another merchant that does not store the identity-related information, the account (namely, an identifier of the user), and the password of the user cannot determine whether the user is trusted, and the user needs to be verified based on different identifiers in different fields. Consequently, trustworthiness and interoperability in the different fields cannot be achieved, in other words, a same identifier of the terminal cannot be used in the different fields.

The following describes technical solutions in embodiments of this application with reference to accompanying drawings.

The technical solutions in embodiments of this application may be applied to various communication systems, for example, a wireless fidelity (wireless fidelity, Wi-Fi) system, a vehicle to everything (vehicle to everything, V2X) communication system, a device-to-device (device-to-device, D2D) communication system, an internet of vehicles communication system, a 4th generation (4th generation, 4G) mobile communication system like a long term evolution (long term evolution, LTE) system, a 5th generation (5th generation, 5G) mobile communication system like a new radio (new radio, NR) system, and a communication system evolved after 5G like a 6th generation (6th generation, 6G) mobile communication system.

All aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In addition, in embodiments of this application, terms such as "for example" and "such as" are used to represent giving an example, an illustration, or a description. Any embodiment or implementation described as an "example" in this application should not be explained as being more preferred or having more advantages than another embodiment or implementation. Exactly, the term "example" is used to present a concept in a specific manner.

A network architecture and a service scenario that are described in embodiments of this application are intended to describe the technical solutions in embodiments of this application more clearly, and do not constitute a limitation on the technical solutions provided in embodiments of this application. A person of ordinary skill in the art may know that with evolution of the network architecture and emergence of a new service scenario, the technical solutions provided in embodiments of this application are also applicable to a similar technical problem.

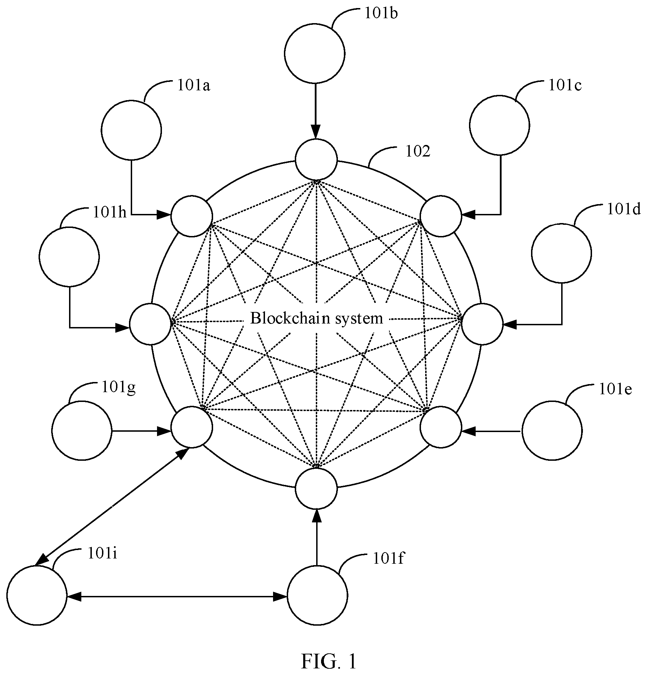

For ease of understanding embodiments of this application, a communication system shown in FIG. 1 is first used as an example to describe in detail a communication system to which embodiments of this application are applicable. For example, FIG. 1 is a diagram of an architecture of a communication system to which a communication method is applicable according to an embodiment of this application.

As shown in FIG. 1, the communication system includes at least one node (nodes 101a to 101i) and a storage system 102.

The storage system 102 may include one or more storage nodes.

The storage system 102 may include one or more of the following: a blockchain system (in this case, the storage node may be a blockchain node), a distributed storage system (the storage node is a node in a distributed system), or a communication device (the storage node is a communication device).

The blockchain system may include one or more blockchain nodes, the distributed storage system may include one or more distributed storage devices, and the communication device may include a device corresponding to an operator.

It should be understood that the blockchain node may be a terminal or network device, the storage device in the distributed storage system may be a terminal or network device, and the communication device may be a terminal or network device.

A node in the at least one node (nodes 101a to 101i) may exchange information with the storage system. If the at least one node includes a plurality of nodes, two nodes in the plurality of nodes may directly exchange information. A node in the at least one node (nodes 101a to 101i) may include a terminal and a network device. A node (nodes 101a to 101i) in the at least one node may be a device corresponding to a user. The network device may be a device corresponding to a card manufacturer or terminal manufacturer, a device corresponding to a trusted third party, an over-the-air provisioning server, a device corresponding to an operator, or a device corresponding to an authority. The terminal manufacturer may also be referred to as a device manufacturer , a device provider, or the like. It may be understood that the card manufacturer , the terminal manufacturer, the trusted third party, the operator, or the authority is merely used as an example. During actual implementation, there may be another organization or institution.

The device corresponding to the card manufacturer or terminal manufacturer may be a device configured to implement a service of the card manufacturer or terminal manufacturer, for example, a card writing device of the card manufacturer or terminal manufacturer.

The device corresponding to the operator is a device, for example, a server of the operator, a network element in a core network, or an access network device, configured to provide a service of the operator. The device corresponding to the authority is a device, for example, a server or host that belongs to the authority, that can be configured to provide a service of the authority.

A device corresponding to a trusted third party may be a device, for example, a server or host that belongs to the trusted third party, that can be configured to provide a service of the trusted third party.

The terminal is a terminal that accesses the communication system and that has a transceiver function, or a chip or chip system that may be disposed in the terminal, or a unit or module having a terminal function. The terminal may also be referred to as a terminal device, or may be referred to as user equipment (user equipment, UE), a mobile station (mobile station, MS), a mobile terminal (mobile terminal, MT), or the like, or may be a device configured to provide voice or data connectivity to a user, or may be an internet of things device. For example, the terminal includes a handheld device or vehicle-mounted device that has a wireless connection function. Currently, the terminal may be a mobile phone, a tablet computer, a notebook computer, a palmtop computer, a mobile internet device (mobile internet device, MID), a wearable device (for example, a smartwatch, a smart band, a pedometer, or smart glasses), a vehicle-mounted device (for example, an automobile, a bicycle, an electric vehicle, an aircraft, a ship, a train, or a high-speed train), a satellite terminal, a virtual reality (virtual reality, VR) device, an augmented reality (augmented reality, AR) device, a smart point of sale (point of sale, POS) machine, customer-premises equipment (customer-premises equipment, CPE), a wireless terminal in industrial control, a smart home device (for example, a refrigerator, a television, an air conditioner, or an electricity meter), an intelligent robot, a robotic arm, a workshop device, a wireless terminal in self-driving, a wireless terminal in telemedicine, a wireless terminal in a smart grid (smart grid), a wireless terminal in transportation safety, a wireless terminal in a smart city, a wireless terminal in a smart home, a flight device (for example, an intelligent robot, a hot balloon, an uncrewed aerial vehicle, or an aircraft), or the like. The terminal may alternatively be a vehicle apparatus, for example, an entire vehicle apparatus, an in-vehicle module, an in-vehicle chip, an on board unit (on board unit, OBU), or a telematics box (telematics box, T-BOX). The terminal may alternatively be another device having a terminal function. For example, the terminal may alternatively be a device that functions as a terminal in D2D communication.

The terminal in this application may alternatively be a module or unit that can be configured to implement a function of the terminal. For example, the terminal may alternatively be a universal integrated circuit card (universal integrated circuit card, UICC). It should be understood that the UICC card in embodiments of this application is merely used as an example. During actual implementation, the UICC card may alternatively be replaced with a device having a function of the UICC card. In addition, the UICC card may have another name, for example, a blockchain universal integrated circuit card (blockchain UICC, B-UICC). This is not limited in embodiments of this application.

A device form of the terminal is not limited in embodiments of this application. An apparatus for implementing a function of the terminal may be a terminal, or may be an apparatus, for example, a chip system, that can support the terminal in implementing the function. The apparatus may be mounted in the terminal, or may be used together with the terminal. In embodiments of this application, the chip system may include a chip, or may include a chip and another discrete device.

In a possible scenario, the network device may be a base station (base station), an evolved NodeB (evolved NodeB, eNodeB), a transmission reception point (transmitting and receiving point, TRP), a transmission point (transmitting point, TP), a next-generation NodeB (next-generation NodeB, gNB), a next-generation base station in a 6th generation (6th generation, 6G) mobile communication system, a base station in a future mobile communication system, a satellite, an access point (access point, AP) in a Wi-Fi system, an integrated access and backhaul (integrated access and backhaul, IAB) node, or a network device in a mobile switching center non-terrestrial network (non-terrestrial network, NTN) communication system, that is, may be deployed on a high-altitude platform or a satellite. The network device may be a macro base station (for example, 110a in FIG. 1), a micro base station or an indoor base station (for example, 110b in FIG. 1), a relay node or a donor node, or a radio controller in a cloud radio access network (cloud radio access network, CRAN) scenario. The network device may alternatively be a device that functions as a base station in device to device (device to device, D2D) communication, internet of vehicles communication, uncrewed aerial vehicle communication, or machine communication. Optionally, the network device may alternatively be a server, a wearable device, a vehicle, a vehicle-mounted device, or the like. For example, an access network device in a vehicle to everything (vehicle to everything, V2X) technology may be a road side unit (road side unit, RSU).

In another possible scenario, a plurality of network devices collaborate to assist the terminal in implementing radio access, and different network devices respectively implement a part of functions of the base station. For example, the network device may be a central unit (central unit, CU), a distributed unit (distributed unit, DU), a CU-control plane (control plane, CP), a CU-user plane (user plane, UP), or a radio unit (radio unit, RU). The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). It may be understood that the network device may be a CU node, a DU node, or a device including the CU node and the DU node. In addition, the CU may be classified into a network device in a radio access network (radio access network, RAN), or may be classified into a network device in a core network (core network, CN). This is not limited herein.

In different systems, the CU (or the CU-CP and the CU-UP), the DU, or the RU may also have different names, but a person skilled in the art may understand meanings of the names. For example, in an open access network (open RAN, ORAN) system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by a software module, a hardware module, or a combination of a software module and a hardware module.

In still another possible scenario, the network device may alternatively be a network element or device in a core network.

In some other possible scenarios, the network device may be a network element or device in a wired network, for example, a server.

A form of the network device is not limited in embodiments of this application. An apparatus for implementing a function of the network device may be a network device, or may be an apparatus, for example, a chip system, that can support the network device in implementing the function. The apparatus may be mounted in the network device or used together with the network device. It should be understood that the node in embodiments of this application is merely used as an example. During actual implementation, the node in embodiments of this application may alternatively be a device corresponding to another organization or institution. Details are not described herein again. It should be understood that the blockchain node in embodiments of this application may include a plurality of communication devices, and the distributed system in embodiments of this application may include a plurality of communication devices.

It should be noted that communication methods provided in embodiments of this application are applicable to communication between the node and the storage node shown in FIG. 1. For a specific implementation, refer to the following method embodiments. Details are not described herein again.

It should be noted that the solutions in embodiments of this application may also be applied to another communication system, and a corresponding name may be replaced with a name of a corresponding function in the another communication system.

It should be understood that FIG. 1 is merely a simplified diagram of an example for ease of understanding. The communication system may further include another network device and/or another terminal, which are/is not shown in FIG. 1.

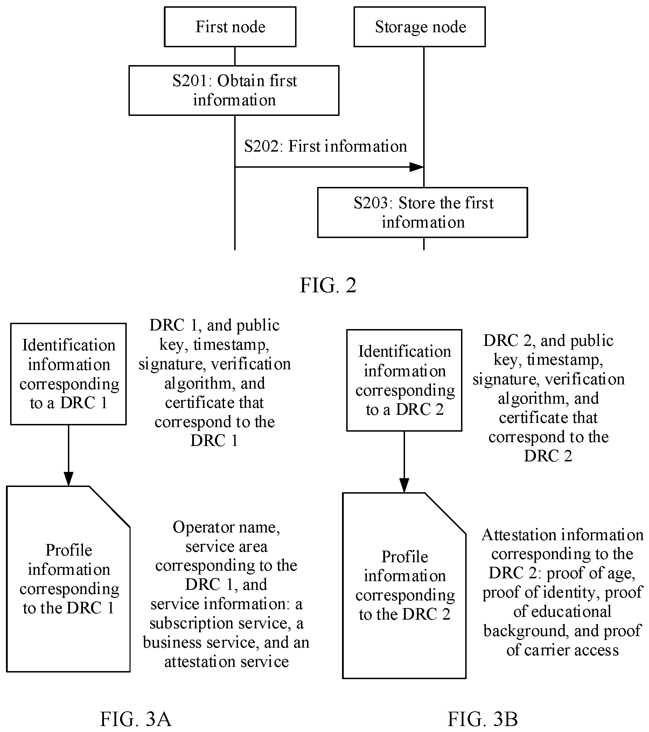

The following describes in detail the communication methods provided in embodiments of this application with reference to FIG. 2 to FIG. 10.

For example, FIG. 2 is a schematic flowchart 1 of a communication method according to an embodiment of this application. The communication method is applicable to communication between the node and the storage node shown in FIG. 2.

As shown in FIG. 2, the communication method includes the following steps.

S201: A first node obtains first information.

The first information includes a first identifier and service information corresponding to the first identifier.

In a possible implementation, the first node may include one or more of the following: a device corresponding to a card manufacturer or terminal manufacturer, a terminal, a device corresponding to an operator, a device corresponding to an authority, a device corresponding to a trusted third party, or an over-the-air provisioning server. In this way, the first node may be determined based on an actual scenario. All the plurality of devices may store identifiers and service information of the devices in the storage node, and therefore, an application scenario is more flexible.

For implementation of the device corresponding to the card manufacturer or terminal manufacturer, the terminal, the device corresponding to the operator, the device corresponding to the authority, and the device corresponding to the trusted third party, refer to related descriptions in the communication system provided in FIG. 1. Details are not described herein again.

The first identifier is information for identifying the first node, or the first identifier is information for identifying an attribute corresponding to the first identifier. The first identifier may reuse a form of an embedded universal integrated circuit card (embedded universal integrated circuit card, eUICC) of a UICC specified by the Global System for Mobile Communications Association (groupe speciale mobile association, GSMA). For example, the first identifier may be "0x12345678". The first identifier herein is merely used as an example. During actual implementation, the first identifier may alternatively be in another possible implementation. Details are not described herein. It should be understood that the first identifier may be a decentralized root credential (decentralized root credential, DRC), or a decentralized identity credential (decentralized identity credential, DIC), or a decentralized self-control credential (decentralized self-control credential, DSCC). The DRC, the DIC, and the DSCC may all be referred to as a self-control identity (self-control identity, scID). It may be understood that, in embodiments of this application, an attribute corresponding to an identifier of a node also corresponds to the node. In other words, the attribute corresponding to the identifier of the node may also be referred to as an attribute corresponding to the node. One node may have a plurality of identifiers, and different identifiers may have respective corresponding attributes.

In some possible implementations, the first identifier may be information that is generated by a trusted node other than the first node and that is used to identify the first node. For example, if the first identifier is the DRC, the DRC may be generated by a trusted node other than the first node. In some other possible embodiments, the first identifier may be information that is generated by the first node based on a root credential and that is used to identify the node or identify an attribute corresponding to the node, for example, a decentralized identity credential (decentralized identity credential, DIC).

In some other possible implementations, the first identifier may be information that is generated by the first node and that is used to identify the first node or identify an attribute of the first node, for example, a decentralized self-control credential (decentralized self-control credential, DSCC). In this way, different types of first identifiers may be used based on different service scenarios. For example, in a service scenario with a high requirement on confidentiality of personal information, a DIC may be used to complete a service. For another example, in a scenario with a low trust requirement on the first node, a DSCC may be used to complete a service.

In some possible implementations, the attribute corresponding to the first node may include a social attribute, for example, the first node being a legal citizen, the first node completing real-name authentication, an education background of the first node, and a job of the first node.

In some possible implementations, the attribute corresponding to the first node may further include another objective attribute, for example, a location, an age, or specific permission of the first node.

In a possible implementation, the service information corresponding to the first identifier includes information about a service that can be provided by the first node, for example, a location of the service (for example, if the service is implemented by using a smart contract, the location of the service may be an address of the smart contract that implements a function of the service), or a parameter required for invoking the service (for example, a parameter for invoking a subscription service or an identity identification service). The following provides descriptions with reference to Case 1 to Case 4.

Case 1: The service information corresponding to the first identifier is used to generate attestation information of a third node and/or authentication information of the third node.

Case 2: The service information corresponding to the first identifier is used to verify the attestation information of the third node and/or the authentication information of the third node.

Case 3: The third node may invoke a service in the service information by using a service corresponding to the first identifier. In other words, the service information corresponding to the first identifier may be used to provide the service in the service information for the third node. For example, the service information corresponding to the first identifier is used to provide one or more of the following services for the third node: a subscription service, a network access service, or a data sharing service. The third node is different from the first node, credential information of the third node is used to verify the third node, and the attestation information of the third node is used to verify an attribute corresponding to an identifier of the third node.

If the first node is a card manufacturer, the service information corresponding to the first identifier is service information of the card manufacturer, and the service information may be used to implement a function of the service information in Case 1 or Case 2. For example, the third node is a terminal, and the terminal is a card. The card manufacturer may generate attestation information for the card based on the service information of the card manufacturer, to prove a security level of the card. Alternatively, the card manufacturer may generate authentication information for the card based on the service information of the card manufacturer, that is, generate a certificate for the card, where the certificate may be used to endorse a public key of the card. Alternatively, the card manufacturer may complete verification on the card based on the service information of the card manufacturer, in other words, when another node verifies the card, the service information of the card manufacturer may be used for verification.

Similarly, if the first node is an operator, the service information corresponding to the first identifier is service information of the card manufacturer, and the service information may be used to implement a function of the service information in Case 1 or Case 2. In addition, the service information may be used to implement a function of the service information in Case 3. For example, a second node may run the service in the service information, to prove an identity of a user or an area in which the user is located.

The attribute corresponding to the identifier of the third node is a condition met by the third node and/or an owner (user) of the third node, for example, an area in which the third node is located or an identity of the owner (user) of the third node. Alternatively, for an implementation principle of the attribute corresponding to the identifier of the third node, refer to related descriptions of the attribute corresponding to the first identifier. Details are not described subsequently.

In the following embodiments, for implementation of the attribute corresponding to the identifier and the attribute corresponding to the node, refer to related descriptions of the attribute corresponding to the first identifier. Details are not described again.

The identifier of the third node is information used to identify the third node. There may be one or more identifiers of the third node, and each identifier of the third node has a corresponding attribute.

Verifying the third node is verifying whether a node is the third node, or verifying legality, validity, or the like of the third node. Verifying the attribute corresponding to the identifier of the third node is verifying whether the attribute corresponding to the identifier of the third node is authentic.

Optionally, the first information further indicates credential information corresponding to the first identifier, and the credential information corresponding to the first identifier is used to verify the first node and/or the attribute corresponding to the first identifier. In other words, the credential information corresponding to the first identifier includes information used to verify the first node, namely, authentication information corresponding to the first identifier, and/or information used to verify the attribute corresponding to the first identifier, namely, attestation information corresponding to the first identifier. It may be understood that the authentication information corresponding to the first identifier is used to verify the first node, and the attestation information corresponding to the first identifier is used to verify the attribute corresponding to the first node.

Verifying the first node is verifying whether a node is the first node, or verifying legality, validity, or the like of the third node. For an implementation principle of verifying the first node, refer to related descriptions of verifying the third node. Details are not described herein again.

For verifying the attribute corresponding to the first identifier, refer to related descriptions of verifying the attribute corresponding to the identifier of the third node. Details are not described herein again.

In some possible examples, the authentication information corresponding to the first identifier may include a public key corresponding to the first identifier, information about a subject corresponding to the first identifier, a signature corresponding to the first identifier, a cryptographic algorithm corresponding to the first identifier, information of an issuer of the first identifier, a validity time of the authentication information corresponding to the first identifier, and information indicating whether the authentication information corresponding to the first identifier has been revoked.

The public key corresponding to the first identifier may be used to verify whether information is signed using a private key corresponding to the first identifier. The subject corresponding to the first identifier is an object to which the first identifier belongs. The signature corresponding to the first identifier is information obtained by signing the first identifier. The cryptographic algorithm corresponding to the first identifier may also be referred to as a cryptographic suite corresponding to the first identifier, and includes one or more of the following: a key length, an encryption algorithm, a decryption algorithm, a signature algorithm, a common parameter, or the like. The information of the issuer of the first identifier may be used to verify the information of the issuer of the first identifier. For example, the information of the issuer of the first identifier may be a public key of the issuer of the first identifier. The information indicating whether the authentication information corresponding to the first identifier has been revoked may be information indicating all revoked authentication information, for example, a revocation list (including identifiers of all the revoked authentication information).

The attestation information corresponding to the first identifier may also be referred to as a certificate corresponding to the first identifier, a verifiable evidence corresponding to the first identifier, a verifiable credential (verifiable credential, VC) corresponding to the first identifier, or the like. Details are not described herein again.

The attestation information corresponding to the first identifier is generated based on service information of a fourth node.

In a possible design scheme, the attestation information corresponding to the first identifier is generated by the fourth node based on the service information corresponding to the fourth node, if the first identifier is generated by the fourth node, the attestation information corresponding to the first identifier is signed using a private key corresponding to the fourth node, and the fourth node is different from the first node.

In a possible implementation, when the storage node is a blockchain node, the fourth node may store the service information corresponding to the fourth node in a blockchain system. The service information may indicate a service for generating attestation information of the node.

In a possible implementation, the service that is indicated by the service information and that is used to generate the attestation information of the node is implemented by using a smart contract. In this case, the attestation information of the first identifier may be obtained by the fourth node by invoking the smart contract. It may be understood that, in this case, the attestation information of the first identifier may alternatively be obtained by a node other than the fourth node by invoking the smart contract.

In a possible implementation, the service information of the fourth information may indicate an address of a website for generating the attestation information corresponding to the identifier. In this case, the attestation information corresponding to the first identifier may be obtained by the fourth node by accessing the website based on the address of the website. In this case, the attestation information corresponding to the first identifier may be signed using the private key of the fourth node.

If the first identifier is generated using another identifier of the first node, the first identifier may be signed using a private key corresponding to the identifier that generates the first identifier.

The service information corresponding to the fourth node may be service information corresponding to an identifier of the fourth node. For the service information corresponding to the fourth node, refer to the service information corresponding to the first identifier. Details are not described herein again.

Optionally, the service information corresponding to the fourth node is used to generate service result information, the service result information includes credential information of a fifth node, the fifth node is different from the fourth node, and the credential information of the fifth node is used to verify the fifth node and/or an attribute corresponding to an identifier of the fifth node. For implementation of the service information corresponding to the fourth node, refer to an implementation principle of the service information corresponding to the first identifier. Details are not described herein again.

In a possible implementation, the first information includes the first identifier, the service information corresponding to the first identifier, and one or more of the following: the authentication information corresponding to the first identifier, the attestation information corresponding to the first identifier, information indicating a type of the first node, the information of the issuer of the first identifier, or information indicating a disclosure condition of the credential information corresponding to the first identifier.

It may be understood that, in embodiments of this application, that information A includes information B may mean that the information A includes information indicating the information B.

The type of the first node may be classified based on an owner of a device corresponding to the first node. For example, the type of the first node may indicate whether the first node is a terminal, a device corresponding to an operator, or a device corresponding to another merchant. It may be understood that the type of the first node may alternatively be classified in another manner, for example, may be classified based on a service or function implemented by the first node. This is not limited in embodiments of this application.

The issuer of the first identifier may also be referred to as a subject that generates the first identifier, for example, an individual, an organization, or an institution. The information of the issuer of the first identifier may be information used to identify the issuer of the first identifier, for example, an identifier of the issuer of the first identifier.

The disclosure condition of the credential information corresponding to the first identifier is a condition under which the credential information corresponding to the first identifier can be displayed or provided (disclosed). For example, the disclosure condition of the credential information corresponding to the first identifier may be a time (for example, a time period) in which the credential information corresponding to the first identifier can be displayed or provided, a range (for example, a network domain) in which the credential information corresponding to the first identifier can be displayed or provided, or a scenario in which the credential information corresponding to the first identifier can be displayed or provided.

For ease of understanding, the following describes the first information with reference to different implementations of the first information.

Implementation 1: The first information includes identification information corresponding to the first identifier, and the identification information corresponding to the first identifier includes the first identifier and the credential information corresponding to the first identifier.

Optionally, the first information may further include one or more of the following: the information indicating the type of the first node, the information of the issuer of the first identifier, or the information indicating the disclosure condition of the credential information corresponding to the first identifier. For example, the first information may further include profile (profile) information corresponding to the first identifier, where the profile information corresponding to the first identifier includes the information indicating the type of the first node, the information of the issuer of the first identifier, or the information indicating the disclosure condition of the credential information corresponding to the first identifier.

It may be understood that the profile information corresponding to the first identifier may include the service information corresponding to the first identifier. In addition, if the credential information corresponding to the first identifier includes the authentication information corresponding to the first identifier, the first information may further include the attestation information corresponding to the first identifier. For example, when the first information further includes the profile information corresponding to the first identifier, the profile information corresponding to the first identifier may further include the attestation information corresponding to the first identifier.

The following further describes the first information by using an example in which the identification information corresponding to the first identifier includes first authentication information. It is assumed that the first node is the device corresponding to the operator, and the first identifier is a DRC 1 of the device corresponding to the operator. In this case, as shown in FIG. 3A, identification information corresponding to the DRC 1 includes the DRC 1, a public key corresponding to the DRC 1, a validity time (which may also be referred to as a timestamp) corresponding to the DRC 1, a signature corresponding to the DRC 1, a cryptographic algorithm (which may also be referred to as a verification algorithm) corresponding to the DRC 1, information indicating whether authentication information corresponding to the DRC 1 has been revoked, and the like. Profile information corresponding to the DRC 1 includes the subject corresponding to the first identifier, for example, a name of the operator, a service area corresponding to the first identifier, and service information (namely, information about a service provided by the operator) corresponding to the DRC 1. A service in the service information corresponding to the DRC 1 may include a subscription service, a business service, and an attestation service. The subscription service is used to provide a service of package handling or business handling for a user, and the business service is used to provide one or more of the following services for the user: a call detail record query, a tariff query, or a location query.

For another example, it is assumed that the first node is a terminal and the first identifier is a DRC 2 of the terminal. In this case, as shown in FIG. 3B, the identification information corresponding to the first identifier includes the DRC 2, a public key corresponding to the DRC 2, the validity period of the DRC 2, a signature for the DRC 2, a cryptographic algorithm used for the DRC 2, information indicating whether authentication information corresponding to the DRC 2 has been revoked, and the like. Profile information corresponding to the DRC 2 includes attestation information and attributes corresponding to the DRC 2. For example, the attestation information of the DRC 2 may include one or more of the following: proof of age, proof of identity, proof of educational background, or proof of operator access. Proof of age is used to verify the age of a user, proof of identity is used to verify the identity of the user, proof of educational background is used to verify academic qualifications of the user, and proof of operator access is used to verify that the user has permission to access the operator. The attributes corresponding to the first identifier indicates whether the user is an individual user or an organization.

Implementation 2: The first information includes identification information corresponding to the first identifier and profile information corresponding to the first identifier, the identification information corresponding to the first identifier includes the first identifier, and the profile information corresponding to the first identifier includes the credential information corresponding to the first identifier.

The profile information corresponding to the first identifier further includes one or more of the following: the information indicating the type of the first node, the information of the issuer of the first identifier, or the information indicating the disclosure condition of the credential information corresponding to the first identifier. It may be understood that the profile information corresponding to the first identifier further includes the service information of the first identifier.

It should be understood that, in Implementation 1 and Implementation 2, if the credential information corresponding to the first identifier includes the authentication information corresponding to the first identifier, the profile information corresponding to the first identifier may further include the attestation information corresponding to the first identifier. If the credential information corresponding to the first identifier includes the attestation information corresponding to the first identifier, the profile information corresponding to the first identifier may further include the authentication information corresponding to the first identifier. The first information in Implementation 1 and Implementation 2 is merely used as an example. During actual implementation, the first information may alternatively be implemented in another manner. Details are not described herein again.

In a possible implementation, if the first node is the terminal, the identification information corresponding to the first identifier is information signed using a private key that corresponds to an identifier (for example, a DRC) of the first node and that is generated by the card manufacturer or the terminal manufacturer. The card manufacturer or the terminal manufacturer may further generate a public key corresponding to the identifier of the first node, and the card manufacturer or the terminal manufacturer may further upload, to the storage node, the public key corresponding to the identifier of the first node or a public key hash. In this way, a verification node (for example, the node 101i in FIG. 1) may obtain, from the storage node, the public key corresponding to the identifier of the first node or the public key hash, and verify the identification information corresponding to the first identifier based on the public key corresponding to the identifier of the first node, to verify the first node or the attribute corresponding to the first identifier.

S202: The first node sends the first information to the storage node. Correspondingly, the storage node receives the first information from the first node.

In this embodiment of this application, the storage node is one or more of the following: a blockchain node, a distributed storage node, or a communication device; and the communication device is different from the first node.

For an implementation principle of the storage node, refer to related descriptions in the communication system provided in FIG. 1. Details are not described herein again. The blockchain node is used as an example. In this case, S202 may include: The first node sends the first information to the blockchain node. Correspondingly, the blockchain node receives the first information from the first node.

The distributed storage node is used as an example. In this case, S202 may include: The first node sends the first information to a node in the distributed storage node. Correspondingly, the node in the distributed storage node receives the first information from the first node.

S203: The storage node stores the first information.

If the storage node is a blockchain node, the first information may be stored in a node in the blockchain node in a block manner. If the storage node is a distributed storage node, the first information may be stored in a node in the distributed storage node. In some possible scenarios, the distributed storage node may be a blockchain node.

According to the method provided in FIG. 2, the first node may send the first identifier and the service information corresponding to the first identifier to the storage node, so that the storage node can obtain the first identifier of the first node and the service information corresponding to the first identifier, and another node can obtain, via the storage node, the service information corresponding to the first identifier. This increases a channel for obtaining the service information, and reduces dependence on the first node. Therefore, the method can be applied to more scenarios.

For ease of understanding, the following describes the communication method provided in FIG. 2 with reference to different scenarios by using the device corresponding to the card manufacturer or terminal manufacturer, the device corresponding to the operator, the device corresponding to the authority, the device corresponding to the trusted third party, the over-the-air provisioning server, or the terminal as an example.

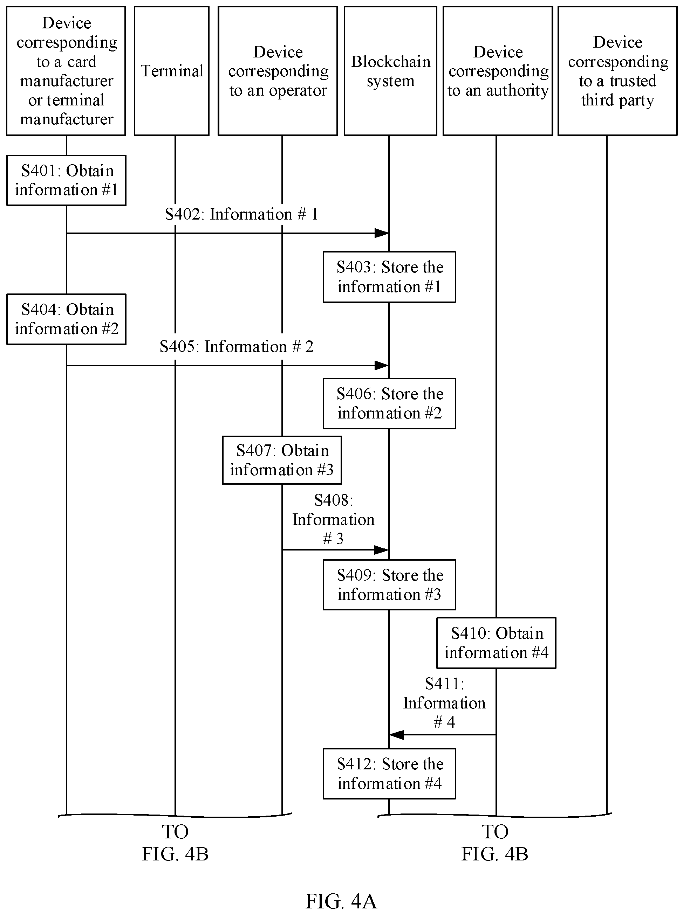

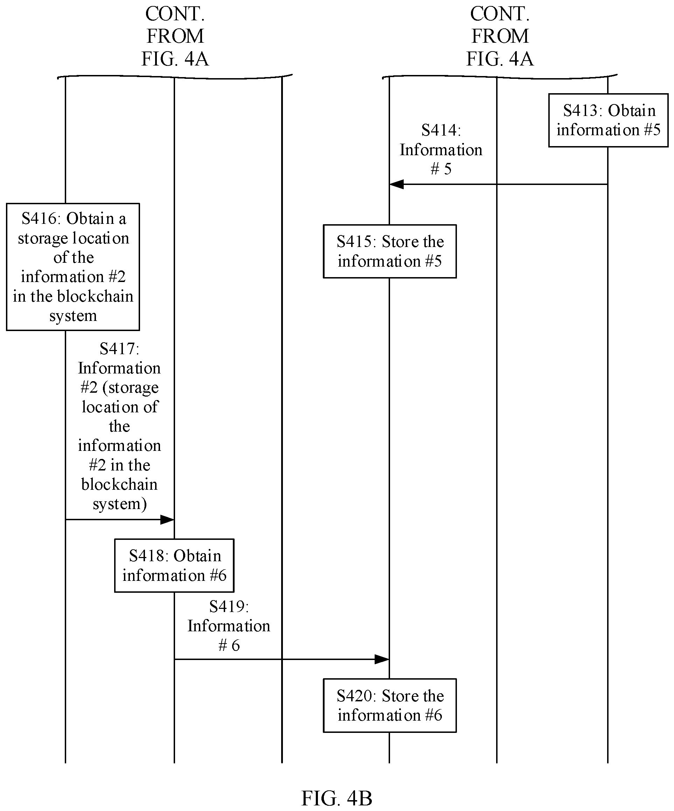

In some scenarios, the card manufacturer or the terminal manufacturer generates, for the terminal, an identifier of the terminal and credential information corresponding to the identifier of the terminal, the first node in the method provided in FIG. 2 may be the device corresponding to the card manufacturer or terminal manufacturer, the device corresponding to the operator, the device corresponding to the authority, the device corresponding to the trusted third party, the over-the-air provisioning server (not shown in FIG. 4A and FIG. 4B), or the terminal. In this case, a communication method provided in an embodiment of this application is shown in FIG. 4A and FIG. 4B. It should be understood that, during actual implementation, the first node may alternatively be another device. Details are not described herein again. FIG. 4A and FIG. 4B show a communication method according to an embodiment of this application. The communication method includes the following steps.

S401: A device corresponding to a card manufacturer or terminal manufacturer obtains information #1.

The information #1 includes an identifier #1 of the device corresponding to the card manufacturer or terminal manufacturer and service information corresponding to the identifier #1. For an implementation principle of the identifier #1, refer to related descriptions of the first identifier in the method provided in FIG. 2. For the service information corresponding to the identifier #1, refer to related descriptions of the service information corresponding to the first identifier in the method provided in FIG. 2. For an implementation principle of the information #1, refer to related descriptions of the first information in the method provided in FIG. 2. Details are not described herein again.

S402: The device corresponding to the card manufacturer or terminal manufacturer sends the information #1 to a blockchain node. Correspondingly, the blockchain node receives the information #1 from the device corresponding to the card manufacturer or terminal manufacturer.

S403: The blockchain node stores the information #1.

It may be understood that the information #1 may be stored in a block manner. It should be understood that, in embodiments of this application, unless otherwise specified, the blockchain node may store information in a block manner.

S404: The device corresponding to the card manufacturer or terminal manufacturer obtains information #2.

The information #2 indicates an identifier #2 of a terminal and credential information corresponding to the identifier #2. The information #2 indicates the identifier #2 of the terminal and the credential information corresponding to the identifier #2. The credential information corresponding to the identifier #2 is used to verify the terminal and/or an attribute corresponding to the identifier #2. The identifier #2 and the credential information corresponding to the identifier #2 are generated by a first node.

In a possible implementation, the credential information corresponding to the identifier #2 includes authentication information corresponding to the identifier #2 and/or attestation information corresponding to the identifier #2, the authentication information corresponding to the identifier #2 is used to verify the terminal, and the attestation information corresponding to the identifier #2 is used to verify the attribute corresponding to the identifier #2. The attestation information corresponding to the identifier #2 is signed using a private key of the device corresponding to the card manufacturer or terminal manufacturer. In this way, when the credential information corresponding to the identifier #2 includes the authentication information corresponding to the identifier #2, an identity of the terminal can be verified. When the credential information corresponding to the identifier #2 includes the attestation information corresponding to the identifier #2, the attribute corresponding to the identifier #2 can be verified.

In a possible implementation, the information #2 may further include one or more of the following: service information corresponding to the identifier #2, information indicating a type of the terminal, information of an issuer of the identifier #2, or information indicating a disclosure condition of the credential information corresponding to the identifier #2. In other words, the information #2 may include the identifier #2, the credential information corresponding to the identifier #2, and one or more of the following: the service information corresponding to the identifier #2, the information indicating the type of the terminal, the information of the issuer of the identifier #2, or the information indicating the disclosure condition of the credential information corresponding to the identifier #2. In this way, one or more of the foregoing information can be stored in a storage node, so that another device obtains or provides a corresponding service based on the foregoing information in the storage node.

For the authentication information corresponding to the identifier #2, refer to related descriptions of the authentication information corresponding to the first identifier in the method provided in FIG. 2. For the attestation information corresponding to the identifier #2, refer to related descriptions of the attestation information corresponding to the first identifier in the method provided in FIG. 2. For the service information corresponding to the identifier #2, refer to related descriptions of the service information corresponding to the first identifier in the method provided in FIG. 2. For the information indicating the type of the terminal, refer to related descriptions of the information indicating the type of the first node in the method provided in FIG. 2. For the information of the issuer of the identifier #2, refer to related descriptions of the information of the issuer of the first identifier in the method provided in FIG. 2. For the information indicating the disclosure condition of the credential information corresponding to the identifier #2, refer to related descriptions of the information indicating the disclosure condition of the credential information corresponding to the first identifier in the method provided in FIG. 2.

For ease of understanding, the following describes the information #2 with reference to Implementation 3 and Implementation 4.

Implementation 3: The information #2 includes identification information corresponding to the identifier #2, and the identification information corresponding to the identifier #2 includes the identifier #2 and the credential information corresponding to the identifier #2. In this way, the identification information of the identifier #2 includes the authentication information, so that profile information can be constructed based on an actual situation, and the profile information is more accurate.

Optionally, the information #2 further includes one or more of the following: the service information corresponding to the identifier #2, the information indicating the type of the terminal, the information of the issuer of the identifier #2, or the information indicating the disclosure condition of the credential information corresponding to the identifier #2. It may be understood that the service information corresponding to the identifier #2, the information indicating the type of the terminal, the information of the issuer of the identifier #2, or the information indicating the disclosure condition of the credential information corresponding to the identifier #2 may all be located in the profile information of the identifier #2.

In this way, the identification information of the identifier #2 includes the credential information for authenticating the terminal, so that the profile information can be generated based on an actual situation, the profile information is more accurate, and an amount of stored data can be reduced.

Implementation 4, the information #2 includes identification information corresponding to the identifier #2 and profile information corresponding to the identifier #2, the identification information corresponding to the identifier #2 includes the identifier #2, and the profile information corresponding to the identifier #2 includes the credential information corresponding to the identifier #2.

For example, the profile information corresponding to the identifier #2 further includes one or more of the following: the service information corresponding to the identifier #2, the information indicating the type of the terminal, the information of the issuer of the identifier #2, or the information indicating the disclosure condition of the credential information corresponding to the identifier #2. In this way, the identification information of the identifier #2 includes only the identifier #2, so that an amount of data in the identification information corresponding to the identifier #2 can be reduced, and transmission resource overheads can be reduced. The identification information corresponding to the second identifier and other information may be independently stored or separately read, so that information leakage can be reduced, privacy protection is enhanced, and a release manner is more flexible.

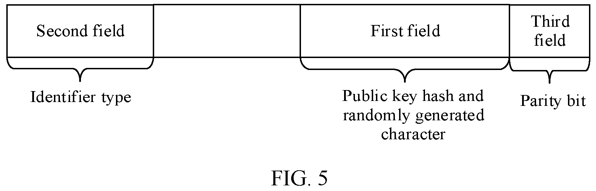

As shown in FIG. 5, the identification information corresponding to the identifier #2 includes a first field and one or both of the following: a second field or a third field, where information carried in the first field indicates the identifier #2, information carried in the second field indicates an identifier type of the identifier #2, and information carried in the third field is used to check information carried in a field, other than the third field, in the identification information corresponding to the identifier #2.

There is a correspondence between the identifier #2 and a hash value of a public key (which may also be referred to as a public key hash) corresponding to the identifier #2, or there is a correspondence between the identifier #2 and a randomly generated character. The information carried in the first field may include the hash value of the public key (public key hash for short) corresponding to the identifier #2, or the information carried in the first field may include the randomly generated character, to indicate the identifier #2. It should be understood that the public key hash and the randomly generated character herein are merely used as examples. In an actual embodiment, the information carried in the first field may further include other information indicating the identifier #2, or the information carried in the first field may include a combination of a plurality of types of information indicating the identifier #2. Details are not described herein again.

In this way, a node corresponding to the second identifier may be indicated by the first field. In addition, when the identification information corresponding to the second identifier includes the second field, a type of the second identifier may be determined, and then, a source, reliability, or an application scenario of the second identifier may be determined based on the second identifier. When the information corresponding to the second identifier includes the third field, another field, for example, the first field, or the first field and the second field, may be checked, to ensure accuracy of the second identifier. The identifier type indicates an identifier generation manner. For example, the identifier type may include a DRC, a DIC, and a DSCC. Different identifier types may be represented by different values or character strings. A value is used as an example. The DRC may be represented by a value "0x1101", the DIC may be represented by a value "0x1111", and the DSCC may be represented by a value "0x1001". Herein, the identifier type of the identifier #2 may be a DRC. In this case, the second field includes the value "0x1101".

The information carried in the third field may be a check value, obtained in a check manner, of a field other than the third field in the information about the identifier #2. The check manner may be cyclic redundancy check or another possible check manner. Details are not described herein again.

In addition, the identification information corresponding to the identifier #2 may further include a field indicating other information. For example, the identification information corresponding to the identifier #2 may further include a field indicating an area to which the identifier #2 belongs, or a field indicating the card manufacturer or device manufacturer that generates the identifier #2.

It should be understood that, in Implementation 3 and Implementation 4, if the credential information corresponding to the identifier #2 includes only the authentication information corresponding to the identifier #2, the profile information corresponding to the identifier #2 may further include the attestation information corresponding to the identifier #2. If the credential information corresponding to the identifier #2 includes only the attestation information corresponding to the identifier #2, the profile information corresponding to the identifier #2 may further include the authentication information corresponding to the identifier #2. In addition, Implementation 3 and Implementation 4 are merely used as examples. During actual implementation, the information #2 may alternatively be implemented in another manner. Details are not described herein again.

In this way, the device corresponding to the card manufacturer or terminal manufacturer can send the information #2 to the storage node. Because service information of the device corresponding to the card manufacturer or terminal manufacturer is also uploaded to the storage node, and the identifier #2 and the credential information corresponding to the identifier #2 are generated by the device corresponding to the card manufacturer or terminal manufacturer, the device corresponding to the card manufacturer or terminal manufacturer can endorse the identifier #2 and the credential information corresponding to the identifier #2. For example, the identifier #2 and the credential information corresponding to the identifier #2 are signed using the private key of the device corresponding to the card manufacturer or terminal manufacturer. Therefore, when the device corresponding to the card manufacturer or terminal manufacturer is trusted, trustworthiness and interoperability of the identifier #2 and the credential information corresponding to the identifier #2 in different fields can be ensured.

S405: The device corresponding to the card manufacturer or terminal manufacturer sends the information #2 to the blockchain node. Correspondingly, the blockchain node receives the information #2 from the device corresponding to the card manufacturer or terminal manufacturer.

S406: The blockchain node stores the information #2.

S407: A device corresponding to an operator obtains information #3.

The information #3 includes an identifier #3 of the device corresponding to the card manufacturer or terminal manufacturer and service information corresponding to the identifier #3. For an implementation principle of the identifier #3, refer to related descriptions of the first identifier in the method provided in FIG. 2. For the service information corresponding to the identifier #3, refer to related descriptions of the service information corresponding to the first identifier in the method provided in FIG. 2. For an implementation principle of the information #3, refer to related descriptions of the first information in the method provided in FIG. 2. Details are not described herein again.

S408: The device corresponding to the operator sends the information #3 to the blockchain node. Correspondingly, the blockchain node receives the information #3 from the device corresponding to the operator.

S409: The blockchain node stores the information #3.

S410: A device corresponding to an authority obtains information #4.

The information #4 includes an identifier #4 of the device corresponding to the card manufacturer or terminal manufacturer and service information corresponding to the identifier #4. For an implementation principle of the identifier #4, refer to related descriptions of the first identifier in the method provided in FIG. 2. For the service information corresponding to the identifier #4, refer to related descriptions of the service information corresponding to the first identifier in the method provided in FIG. 2. For an implementation principle of the information #4, refer to related descriptions of the first information in the method provided in FIG. 2. Details are not described herein again.

S411: The device corresponding to the authority sends the information #4 to the blockchain node. Correspondingly, the blockchain node receives the information #4 from the device corresponding to the authority.

S412: The blockchain node stores the information #4.

S413: A device corresponding to a trusted third party obtains information #5.

The information #5 includes an identifier #5 of the device corresponding to the card manufacturer or terminal manufacturer and service information corresponding to the identifier #5. For an implementation principle of the identifier #5, refer to related descriptions of the first identifier in the method provided in FIG. 2. For the service information corresponding to the identifier #5, refer to related descriptions of the service information corresponding to the first identifier in the method provided in FIG. 2. For an implementation principle of the information #5, refer to related descriptions of the first information in the method provided in FIG. 2. Details are not described herein again.

S414: The device corresponding to the trusted third party sends the information #5 to the blockchain node. Correspondingly, the blockchain node receives the information #5 from the device corresponding to the trusted third party.

S415: The blockchain node stores the information #5.

In addition, the method provided in FIG. 4A and FIG. 4B may further include the following steps.

S416: The device corresponding to the card manufacturer or terminal manufacturer obtains a storage location of the information #2 in a blockchain system, namely, an on-chain address, which may also be referred to as a location in a storage system. It may be understood that, in this embodiment of this application, the storage node may store information in another storage node in the storage system. For example, the blockchain node may store information in another blockchain node in a blockchain, and the information may be stored in a block manner, that is, the information is stored in the blockchain.

It may be understood that the storage location of the information #2 in the blockchain system may be sent by the blockchain system to the device corresponding to the card manufacturer or terminal manufacturer after the blockchain system receives the information #2 and stores the information #2.

S417: The device corresponding to the card manufacturer or terminal manufacturer sends the information #2 to the terminal. Correspondingly, the terminal receives the information #2 from the device corresponding to the card manufacturer or terminal manufacturer.

It may be understood that, in S417, the storage location of the information #2 in the blockchain system may be further sent together with the information #2.

The information #2 and the storage location of the information #2 in the blockchain system may be carried in a same message or different messages.

In addition, the terminal may store information #6.

S418: The terminal obtains the information #6 based on the information #2.

The information #6 includes an identifier #6 and service information corresponding to the identifier #6.

A DRC and a DIC are used as an example. In a possible implementation, the terminal may generate a public/private key of the DIC by itself, and then sign and endorse information about the DIC using a private key of the DRC. Endorsement content includes information such as an ID, the public key, and a validity period of the DIC.

In a possible implementation, the terminal may alternatively generate a public key corresponding to the DIC, use a public key hash corresponding to the DIC as an identifier of the DIC, and then generate a private key of the DIC using a system key corresponding to the DRC and the public key of the DIC.

For an implementation principle of the information #6, refer to related descriptions of the first information. Herein, the identifier #6 may be a DIC of the terminal. The DIC is generated by the terminal based on the identifier #2.

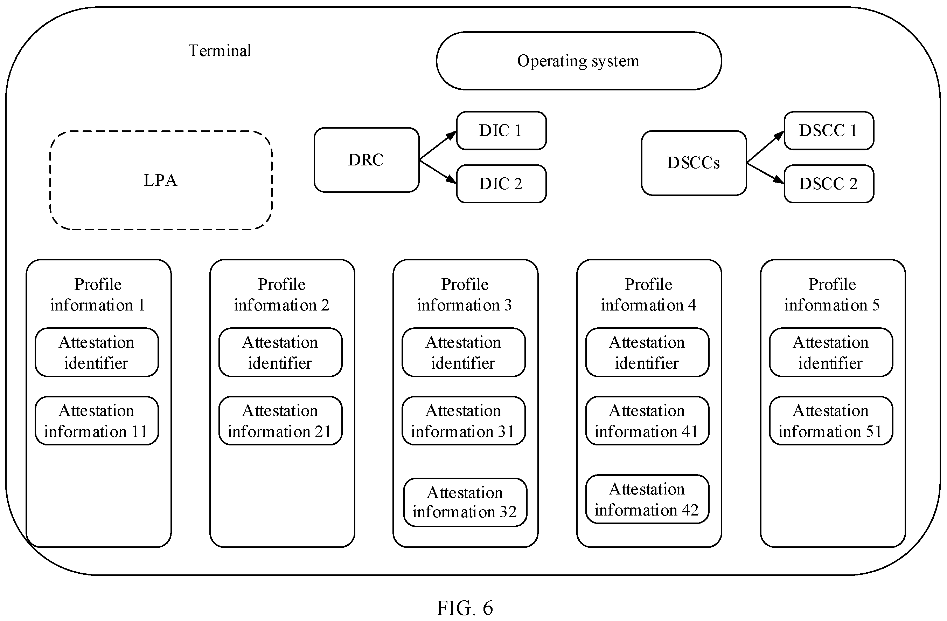

In S418, the terminal may generate a plurality of identifiers of the terminal based on the identifier #2. For example, as shown in FIG. 6, the identifier #2 is a DRC. In this case, the terminal may generate, based on the DRC, a plurality of DICs, for example, a DIC 1 and a DIC 2, profile information corresponding to the DIC 1, and profile information corresponding to the DIC 2. In this case, the terminal may store the DRC, profile information (profile information 1) corresponding to the DRC, the DIC 1, the DIC 3, the profile information (profile information 2) corresponding to the DIC 1, and the profile information (profile information 3) corresponding to the DIC 2. Each piece of profile information may include an attestation identifier (which is used to identify attestation information and has a correspondence with the attestation information), the attestation information, and verification information (indicating a verification method of the attestation information, for example, an algorithm for verifying the attestation information) (not shown in the figure). For example, the profile information 1 may include attestation information 11, the profile information 2 may include attestation information 21, the profile information 3 may include attestation information 31 and attestation information 32, profile information 4 may include attestation information 41 and attestation information 42, and profile information 5 may include attestation information 51. In this case, the identifier # may be the DIC 1 or the DIC 2.

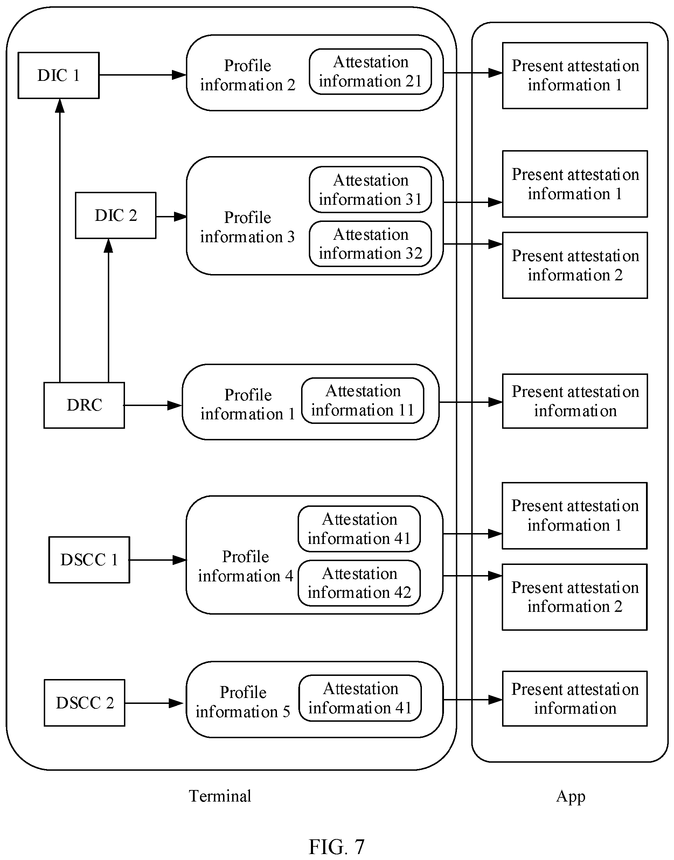

A relationship between the DRC of the terminal and the profile information 1, a relationship between the DIC 1 of the terminal and the profile information 2, and a relationship between the DIC 2 of the terminal and the profile information 3 are shown in FIG. 7. The attestation information in the profile information corresponding to the DRC of the terminal may be signed using the private key corresponding to the card manufacturer or terminal manufacturer. The DIC of the terminal may be signed using a private key corresponding to the DRC of the terminal.

In a possible design scheme, the information #6 may be the information #2. In this case, S418 may be that the terminal reads the information #2 from information stored in the terminal.

In some possible implementations, when a verification node needs to verify the terminal, as shown in FIG. 7, the terminal may present (display) the attestation information through an interface of an application (application, APP), for example, present one or more of the attestation information 11, the attestation information 21, the attestation information 31, and the attestation information 32. The verification node may obtain the attestation information displayed by the terminal (for example, obtain the attestation information by scanning code). After obtaining the attestation information displayed by the terminal, the verification node may obtain a public key from the blockchain node, to verify the attestation information based on the public key.

S419: The terminal sends the information #6. Correspondingly, the blockchain node receives the information #6.

S420: The blockchain system stores the information #6.

For ease of understanding, a correspondence between the first node and the first identifier is described below with reference to the identifier and the information in the method provided in FIG. 4A and FIG. 4B. For a correspondence between the identifier in the method provided in FIG. 4A and FIG. 4B and the first identifier in FIG. 2, and a correspondence between the information in the method provided in FIG. 4A and FIG. 4B and the first information, refer to Table 1.

**Table 1**

| First node | Device corresponding to a card manufacturer or terminal manufacturer | Terminal | Device corresponding to an operator | Device corresponding to an authority | Device corresponding to a trusted third party |
|---|---|---|---|---|---|
| First identifier | Information #1 | Information #2 or information #6 | Information #3 | Information #4 | Information #5 |

The following provides descriptions with reference to specific text. In the solution provided in FIG. 2, in some possible implementations, the first node may be a device corresponding to a card manufacturer or terminal manufacturer. In this case, the information #1 is the first information, the identifier #1 is the first identifier, the information #2 is second information, the identifier #2 is the second identifier, and the information #2, or the information #2 and the storage location of the information #2 in the blockchain system are third information. In S417, the device corresponding to the card manufacturer or terminal manufacturer sends the information #2, or the information #2 and the information #2 in the blockchain node to the terminal. In other words, the first node sends the third information to the terminal. Because the third information may indicate the information #2, the terminal may obtain and use the second information for authentication performed by another node on the terminal. In this way, the terminal can obtain the second information, enabling the another node to authenticate the terminal based on the second information.

In this case, the device corresponding to the card manufacturer or terminal manufacturer may further send a hash value of the information #2 to the blockchain node (the hash value of the information #2 and the information #2 may be carried in a same message or different messages), or the information #2 may be replaced with a hash value of the information #2.

In this way, the device corresponding to the card manufacturer or terminal manufacturer can send the second information to the storage node. Because service information of the device corresponding to the card manufacturer or terminal manufacturer is also uploaded to the storage node, and the identifier #2 and the credential information corresponding to the identifier #2 are generated by the device corresponding to the card manufacturer or terminal manufacturer, the device corresponding to the card manufacturer or terminal manufacturer can endorse the identifier #2 and the credential information corresponding to the identifier #2. For example, the identifier #2 and the credential information corresponding to the identifier #2 can be signed with the private key corresponding to the device corresponding to the card manufacturer or terminal manufacturer, and the device corresponding to the card manufacturer or terminal manufacturer can endorse the identifier #2 and the credential information corresponding to the identifier #2. Therefore, when the device corresponding to the card manufacturer or terminal manufacturer is trusted, trustworthiness and interoperability of the identifier #2 and the credential information corresponding to the identifier #2 in different fields can be ensured.

In some possible implementations, the first node is the device corresponding to the operator. In this case, the first information is the information #3, and the identifier #3 is the first identifier.

In some possible implementations, the first node is the device corresponding to the authority. In this case, the first information is the information #4, and the identifier #4 is the first identifier.

In some possible implementations, the first node is the device corresponding to the trusted third party. In this case, the first information is the information #5, and the identifier #5 is the first identifier.

In some possible implementations, the first node is the terminal. In this case, the first information is the information #6, the identifier #6 is the first identifier, and fourth information is the information #2 and/or the storage location of the information #2 in the blockchain system. In S417, the terminal receives the information #2 and/or the storage location of the information #2 in the blockchain system from the device corresponding to the card manufacturer or terminal manufacturer, in other words, the first node receives the fourth information from the device corresponding to the card manufacturer or terminal manufacturer. In this way, the terminal can obtain the information #6, and can be authenticated based on the information #6.

It may be understood that the blockchain node may be replaced with any possible implementation of the storage node. Details are not described herein again.

For technical effect of the method provided in FIG. 4A and FIG. 4B, refer to the technical effect of the method provided in FIG. 2. Details are not described herein again.

It should be understood that an execution sequence of the steps is not limited in embodiments of this application, provided that the execution sequence is logical. For example, a procedure in which the blockchain node stores information is after the blockchain node receives the information, and a process of sending information is after a process of obtaining the information.

In some possible scenarios, the information #2 in the method provided in FIG. 4A and FIG. 4B may be stored in the terminal, for example, may be provided by the device corresponding to the card manufacturer or terminal manufacturer for the terminal. The first node in the method provided in FIG. 2 may be the device corresponding to the card manufacturer or terminal manufacturer, the device corresponding to the operator, the device corresponding to the authority, the device corresponding to the trusted third party, the over-the-air provisioning server, or the terminal. In this case, the communication method provided in embodiments of this application may further include steps of the method provided in FIG. 4A and FIG. 4B. A difference lies in that, in a possible implementation, the communication method further includes: The device corresponding to the card manufacturer or terminal manufacturer may send the information #2. Correspondingly, the terminal may receive the information #2 from the device corresponding to the card manufacturer or terminal manufacturer. In a possible implementation, S405 may be replaced with: The terminal sends the information #2. Correspondingly, the blockchain node receives the information #2. In other words, the information #2 may be sent by the terminal to the blockchain node. It should be understood that, in this scenario, S404 may not be included. In other words, the information #2 is generated by the terminal. If the first node is the terminal, the information #2 is the first information, the identifier #2 is the first identifier, the information #6 is fifth information, and the identifier #6 is a third identifier. In this way, the first node may send and indicate, to the storage node, different identifiers of the first node and credential information corresponding to the different identifiers, so that different services can be used for the different identifiers, thereby improving privacy. In addition, for technical effect of the communication method in this scenario, refer to the technical effect of the method provided in FIG. 2. Details are not described herein again. In addition, the terminal may further send a hash value of the information #6 to the storage node. In this case, the hash value of the information #6 and the information #6 may be carried in a same message or different messages. Alternatively, the information #6 in S419 and S420 may be replaced with the hash value of the information #6.

It may be understood that the blockchain node may be replaced with any possible implementation of the storage node. Details are not described herein again.

In some possible scenarios, the first node in the method provided in FIG. 4A and FIG. 4B may be the terminal. In this case, the communication method provided in embodiments of this application is shown in the method provided in FIG. 4A and FIG. 4B. A difference lies in that the information #2 in S403 and S404 is replaced with information #7, namely, sixth information. For implementation of the information #7, refer to the information #2. A difference between the information #7 and the first information is that the information #7 may not include service information. The information #7 indicates an identifier #7 of the terminal, namely, a fourth identifier, and credential information corresponding to the identifier #7. The credential information corresponding to the identifier #7 is used to verify the terminal and/or an attribute corresponding to the identifier #7. The identifier #7 and the credential information corresponding to the identifier #7 are generated by the device corresponding to the card manufacturer or terminal manufacturer. In addition, the terminal may further send a hash value of the information #7 to the storage node. In this case, the hash value of the information #7 and the information #7 may be carried in a same message or different messages. Alternatively, the information #7 in S403 and S404 may be replaced with the hash value of the information #7.

The information #7 indicates the identifier #7 of the terminal, namely, a second node, and the credential information corresponding to the identifier #7. The credential information corresponding to the identifier #7 is used to verify the terminal and/or the attribute corresponding to the identifier #7. The identifier #7 and the credential information corresponding to the identifier #7 are generated by the device corresponding to the card manufacturer or terminal manufacturer. The information #7 indicates the identifier #7 of the terminal and the credential information corresponding to the identifier #7. The credential information corresponding to the identifier #7 is used to verify the terminal and/or the attribute corresponding to the identifier #7. The identifier #7 and the credential information corresponding to the identifier #7 are generated by the first node.

Optionally, the credential information corresponding to the identifier #7 includes authentication information corresponding to the identifier #7 and/or attestation information corresponding to the identifier #7, the authentication information corresponding to the identifier #7 is used to verify the terminal, and the attestation information corresponding to the identifier #7 is used to verify the attribute corresponding to the identifier #7.

In a possible implementation, the information #6 may further include one or more of the following: service information corresponding to the identifier #7, the information indicating the type of the terminal, information of an issuer of the identifier #7, or information indicating a disclosure condition of the credential information corresponding to the identifier #7. In other words, the information #6 may include the identifier #7, the credential information corresponding to the identifier #7, and one or more of the following: the service information corresponding to the identifier #7, the information indicating the type of the terminal, the information of the issuer of the identifier #7, or the information indicating the disclosure condition of the credential information corresponding to the identifier #7.

For the authentication information corresponding to the identifier #7, refer to related descriptions of the authentication information corresponding to the first identifier in the method provided in FIG. 2. For the attestation information corresponding to the identifier #7, refer to related descriptions of the attestation information corresponding to the first identifier in the method provided in FIG. 2. For the service information corresponding to the identifier #7, refer to related descriptions of the service information corresponding to the first identifier in the method provided in FIG. 2. For the information indicating the type of the terminal, refer to related descriptions of the information indicating the type of the first node in the method provided in FIG. 2. For the information of the issuer of the identifier #7, refer to related descriptions of the information of the issuer of the first identifier in the method provided in FIG. 2. For the information indicating the disclosure condition of the credential information corresponding to the identifier #7, refer to related descriptions of the information indicating the disclosure condition of the credential information corresponding to the first identifier in the method provided in FIG. 2.

In a possible implementation, the information #7 includes identification information corresponding to the identifier #7, and the identification information corresponding to the identifier #7 includes the identifier #7 and the credential information corresponding to the identifier #7.

Further, the information #7 further indicates one or more of the following: the information indicating the type of the terminal, the information of the issuer of the identifier #7, or the information indicating the disclosure condition of the credential information corresponding to the identifier #7. In other words, profile information corresponding to the identifier #7 includes one or more of the following: the information indicating the type of the terminal, the information of the issuer of the identifier #7, or the information indicating the disclosure condition of the credential information corresponding to the identifier #7.

For an implementation principle of the information #7, refer to related descriptions in Implementation 3. A difference lies in that the information #7 does not include the service information corresponding to the identifier #7.

In a possible implementation, the information #7 includes identification information corresponding to the identifier #7 and profile information corresponding to the identifier #7, the identification information corresponding to the identifier #7 includes the identifier #7, and the profile information corresponding to the identifier #7 includes the credential information corresponding to the identifier #7.

Optionally, the profile information corresponding to the identifier #7 further includes one or more of the following: the information indicating the type of the terminal, the information of the issuer of the identifier #7, or the information indicating the disclosure condition of the credential information corresponding to the identifier #7. For an implementation principle of the information #7, refer to related descriptions in Implementation 4. A difference lies in that the information #7 does not include the service information corresponding to the identifier #7.

Optionally, the identification information corresponding to the identifier #7 includes a fourth field and one or both of the following: a fifth field or a sixth field, where information carried in the fourth field indicates the identifier #7, information carried in the fifth field indicates an identifier type of the identifier #7, and information carried in the sixth field is used to check information carried in a field, other than the sixth field, in the identification information corresponding to the identifier #7.

For an implementation principle of the fifth field, refer to related descriptions of the first field. For an implementation principle of the sixth field, refer to related descriptions of the second field. For an implementation principle of the seventh field, refer to related descriptions of the third field. For the identification information corresponding to the identifier #7, refer to the identification information corresponding to the information #2. Details are not described herein again.

Optionally, the information #7 includes the identifier #7 and one or more of the following: the service information corresponding to the identifier #7, the information indicating the type of the terminal, the information of the issuer of the identifier #7, or the information indicating the disclosure condition of the credential information corresponding to the identifier #7.

It should be understood that, in this scenario, when the first node is the device corresponding to the card manufacturer or terminal manufacturer, the device corresponding to the operator, the device corresponding to the authority, the device corresponding to the trusted third party, or the over-the-air provisioning server, for an implementation principle of the first information, refer to related descriptions in FIG. 2 in which the first node is the device corresponding to the card manufacturer or terminal manufacturer, the device corresponding to the operator, the device corresponding to the authority, the device corresponding to the trusted third party, or the over-the-air provisioning server. Details are not described herein again.

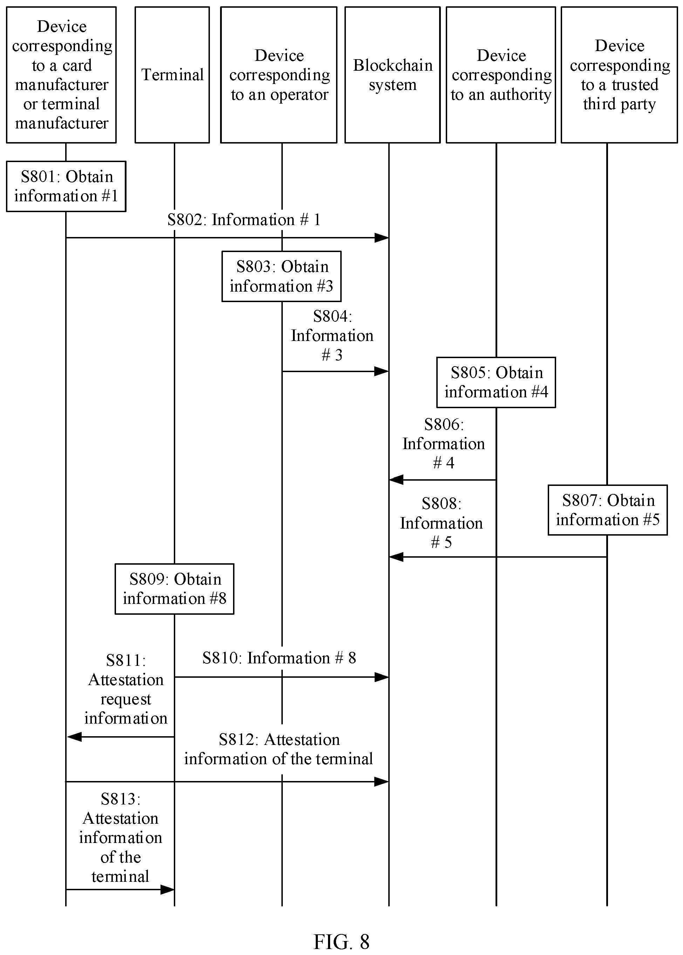

In some scenarios, the first node may be a terminal that generates an identifier of the terminal and credential information corresponding to the identifier of the terminal. The first node in the method provided in FIG. 2 may be the terminal. In this case, a communication method provided in an embodiment of this application is shown in FIG. 8. As shown in FIG. 8, a communication method includes the following steps.

S801: A device corresponding to a card manufacturer or terminal manufacturer generates information #1.

For an implementation principle of the information #1, refer to related descriptions of the information #1 in the method provided in FIG. 4A and FIG. 4B.

S802: The device corresponding to the card manufacturer or terminal manufacturer sends the information #1 to a blockchain node. Correspondingly, the blockchain node receives the information #1 from the device corresponding to the card manufacturer or terminal manufacturer.

S803: A device corresponding to an operator obtains information #3.

For an implementation principle of the information #3, refer to related descriptions of the information #3 in the method provided in FIG. 4A and FIG. 4B.

S804: The device corresponding to the operator sends the information #3 to the blockchain node. Correspondingly, the blockchain node receives the information #3 from the device corresponding to the operator.

S805: A device corresponding to a social authority obtains information #4.

For an implementation principle of the information #4, refer to related descriptions of the information #4 in the method provided in FIG. 4A and FIG. 4B.

S806: The device corresponding to the social authority sends the information #4 to the blockchain node. Correspondingly, the blockchain node receives the information #4 from the device corresponding to the authority.

S807: A device corresponding to a trusted third party obtains information #5.

For an implementation principle of the information #5, refer to related descriptions of the information #5 in the method provided in FIG. 4A and FIG. 4B.

S808: The device corresponding to the trusted third party sends the information #5 to the blockchain node. Correspondingly, the blockchain node receives the information #5 from the device corresponding to the trusted third party.

S809: The terminal obtains information #8.

The information #8 includes an identifier #8 and service information corresponding to the identifier #8.

For an implementation principle of the information #8, refer to related descriptions of the first information in the method provided in FIG. 2. Herein, the identifier #8 may be an identifier generated by the terminal, for example, a DSCC.

S810: The terminal sends the information #8 to the blockchain node. Correspondingly, the blockchain node receives the information #8 from the terminal.

S811: The terminal sends attestation request information to the device corresponding to the card manufacturer or terminal manufacturer. Correspondingly, the device corresponding to the card manufacturer or terminal manufacturer receives the attestation request information from the terminal.

The attestation request information is used to request attestation information corresponding to the terminal, and the attestation information corresponding to the terminal is used to verify the terminal or an attribute corresponding to the identifier of the terminal.

In some possible designs, the attestation request information may carry information used to prove an identity of the terminal to the card manufacturer or the terminal manufacturer, for example, a trustlist (including information used to identify a device produced by the card manufacturer or the terminal manufacturer) or a proof of purchase provided by the card manufacturer or the terminal manufacturer for the terminal. For example, the card manufacturer or the terminal manufacturer can endorse the terminal, and when the card manufacturer or the device manufacturer is trusted, the terminal can be verified based on the attestation information.

S812: The device corresponding to the card manufacturer or terminal manufacturer sends, to the blockchain node, the attestation information corresponding to the terminal. Correspondingly, the blockchain node receives the attestation information corresponding to the terminal.

The attestation information corresponding to the terminal is obtained based on the attestation request information by the device corresponding to the card manufacturer or terminal manufacturer.

S813: The device corresponding to the card manufacturer or terminal manufacturer sends the attestation information corresponding to the terminal. Correspondingly, the terminal receives the attestation information corresponding to the terminal.

For ease of understanding, the following describes a correspondence between the first node and a first identifier with reference to the identifier and the information in the method provided in FIG. 8. For a correspondence between the identifier in the method provided in FIG. 8 and the first identifier in FIG. 2, and a correspondence between the information in the method provided in FIG. 4A and FIG. 4B and the first information, refer to Table 2 below.

**Table 2**

| First node | Device corresponding to a card manufacturer or terminal manufacturer | Terminal | Device corresponding to an operator | Device corresponding to an authority | Device corresponding to a trusted third party |
|---|---|---|---|---|---|
| First identifier | Information #1 | Information #8 | Information #3 | Information #4 | Information #5 |

The following separately provides descriptions with reference to specific text. In the solution provided in FIG. 2, if the first node is the device corresponding to the card manufacturer or terminal manufacturer, the information #1 is the first information, an identifier #1 is the first identifier, and the attestation request information is the attestation request information.

If the first node is the device corresponding to the operator, the first information is the information #3, and an identifier #3 is the first identifier.

If the first node is the device corresponding to the authority, the first information is the information #4, and an identifier #4 is the first identifier.

If the first node is the device corresponding to the trusted third party, the first information is the information #5, and an identifier #5 is the first identifier.

If the first node is the terminal, the first information is the information #8, and the identifier #8 is the first identifier. The attestation information corresponding to the terminal is the attestation information corresponding to the first node.

In the solution provided in FIG. 8, there may be one or more identifiers #8. For example, as shown in FIG. 6, the identifier #8 may include a DSCC 1 and a DSCC 2. As shown in FIG. 6, the terminal may store the DSCC 1, profile information 4 corresponding to the DSCC 1, the DSCC 2, and profile information 5 corresponding to the DSCC 2. The profile information 4 may include attestation information 41 and attestation information 42, and the profile information 5 may include attestation information 51. It should be understood that the profile information and the attestation information shown in FIG. 6 are merely used as an example. During actual implementation, more or less attestation information may be further included. It may be understood that, as shown in FIG. 7, the terminal may display the attestation information in the profile information 5 and the attestation information in the profile information 4 via an app.

It may be understood that the solution provided in FIG. 8 may further include S416 and S417 in the solution provided in FIG. 4A and FIG. 4B. The solution provided in FIG. 8 may further include S418 to S420 in the solution provided in FIG. 4A and FIG. 4B. For a specific implementation, refer to related descriptions in FIG. 4A and FIG. 4B. Details are not described herein again. In this case, the terminal may store a DRC, DIC 1, DIC 2, DSCC 1, and DSCC 1 of the terminal, and profile information corresponding to the DRC, DIC 1, DIC 2, DSCC 1, and DSCC 1 of the terminal. For technical effect of the method provided in FIG. 8, refer to the technical effect of the method provided in FIG. 2. Details are not described herein again. In addition, based on the solution provided in FIG. 8, a second node may obtain sixth information and upload the sixth information by itself. This can improve a degree of control of the second node on an identifier and credential information of the second node, for example, the sixth information.

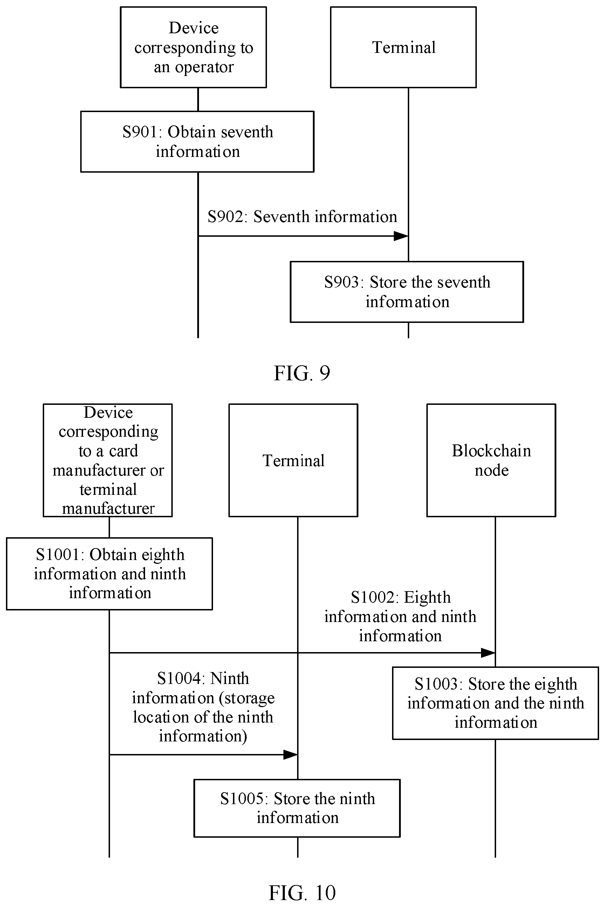

In a possible embodiment, a device corresponding to an operator may obtain another identifier corresponding to an existing identifier of a terminal, and send the another identifier corresponding to the existing identifier of the terminal to the terminal. In this case, an embodiment of this application further provides a communication method. The following describes the communication method with reference to FIG. 9. As shown in FIG. 9, the communication method includes the following steps.

S901: The device corresponding to the operator obtains seventh information.

The seventh information indicates a fifth identifier of the terminal and credential information corresponding to the fifth identifier, the credential information corresponding to the fifth identifier is used to verify the terminal and/or an attribute corresponding to the fifth identifier, the fifth identifier is different from a subscription permanent identifier of the terminal in the device corresponding to the operator, for example, a subscription permanent identifier (subscription permanent identifier, SUPI), the fifth identifier corresponds to the subscription permanent identifier of the terminal, and the subscription permanent identifier is used for communication between the device corresponding to the operator and the terminal.

The device corresponding to the operator may be a device corresponding to an operator. For example, the device corresponding to the operator may be a device (a core network element) in a core network of the operator, or the device corresponding to the operator may be an access network device of the operator.

The terminal may be a terminal. For an implementation principle of the terminal, refer to related descriptions in the communication system provided in FIG. 1. Details are not described herein again.

The fifth identifier of the terminal is information used to identify the terminal. For example, the fifth identifier of the terminal may be a DSCC of the terminal. It may be understood that, in this embodiment of this application, the fifth identifier DSCC is merely used as an example. During actual implementation, the fifth identifier may alternatively have another name. Details are not described herein again.

The fifth identifier of the terminal may be generated based on a root credential of the terminal, for example, a DRC. The credential information corresponding to the fifth identifier may include authentication information corresponding to the fifth identifier and/or attestation information corresponding to the fifth identifier.

The authentication information corresponding to the fifth identifier is used to verify the terminal, and the attestation information corresponding to the fifth identifier is used to verify an attribute corresponding to the terminal.

The subscription permanent identifier of the terminal is used to identify the terminal in a process in which the terminal communicates with the device corresponding to the operator. For example, when the device corresponding to the operator is a device corresponding to a card manufacturer or terminal manufacturer, and the terminal is a terminal, the subscription permanent identifier may be an SUPI of the terminal generated by the device corresponding to the card manufacturer or terminal manufacturer based on a DRC.

In a possible implementation, the seventh information may further include one or more of the following: service information corresponding to the fifth identifier, information indicating a type of the terminal, information of an issuer of the fifth identifier, or information indicating a disclosure condition of the credential information corresponding to the fifth identifier. In other words, the seventh information may include the fifth identifier, the credential information corresponding to the fifth identifier, and one or more of the following: the service information corresponding to the fifth identifier, the information indicating the type of the terminal, the information of the issuer of the fifth identifier, or the information indicating the disclosure condition of the credential information corresponding to the fifth identifier.

For the authentication information corresponding to the fifth identifier, refer to related descriptions of the authentication information corresponding to the first identifier in the method provided in FIG. 2. For the attestation information corresponding to the fifth identifier, refer to related descriptions of the attestation information corresponding to the first identifier in the method provided in FIG. 2. For the service information corresponding to the fifth identifier, refer to related descriptions of the service information corresponding to the first identifier in the method provided in FIG. 2. For the information indicating the type of the terminal, refer to related descriptions of the information indicating the type of the first node in the method provided in FIG. 2. For the information of the issuer of the fifth identifier, refer to related descriptions of the information of the issuer of the first identifier in the method provided in FIG. 2. For the information indicating the disclosure condition of the credential information corresponding to the fifth identifier, refer to related descriptions of the information indicating the disclosure condition of the credential information corresponding to the first identifier in the method provided in FIG. 2.

In a possible implementation, the seventh information includes identification information corresponding to the fifth identifier, and the identification information corresponding to the fifth identifier includes the fifth identifier and the credential information corresponding to the fifth identifier. In addition, the seventh information may further include one or more of the following: information about a service corresponding to the fifth identifier, the information indicating the type of the terminal, the information of the issuer of the fifth identifier, or the information indicating the disclosure condition of the credential information corresponding to the fifth identifier. In this case, for implementation of the seventh information, refer to related descriptions of Implementation 3. Details are not described herein again.

In a possible implementation, the seventh information includes identification information corresponding to the fifth identifier and profile information corresponding to the fifth identifier, the identification information corresponding to the fifth identifier includes the fifth identifier, and the profile information corresponding to the fifth identifier includes the credential information corresponding to the fifth identifier.

Optionally, the profile information corresponding to the fifth identifier further includes one or more of the following: the information about the service corresponding to the fifth identifier, the information indicating the type of the terminal, the information of the issuer of the fifth identifier, or the information indicating the disclosure condition of the credential information corresponding to the fifth identifier. In this case, for implementation of the seventh information, refer to related descriptions of Implementation 4. Details are not described herein again.

Optionally, the identification information corresponding to the fifth identifier includes a seventh field and one or both of the following: an eighth field or a ninth field, where information carried in the seventh field indicates the fifth identifier, information carried in the eighth field indicates an identifier type of the fifth identifier, and information carried in the ninth field is used to check information carried in a field, other than the ninth field, in the identification information corresponding to the fifth identifier.

For an implementation principle of the seventh field, refer to related descriptions of the first field in the method provided in FIG. 2. For descriptions of the eighth field, refer to related descriptions of the second field in the method provided in FIG. 2. For descriptions of the ninth field, refer to related descriptions of the third field in the method provided in FIG. 2. Details are not described herein again.

S902: The device corresponding to the operator sends the seventh information to the terminal. Correspondingly, the terminal receives the seventh information from the device corresponding to the operator.

S903: The terminal stores the seventh information.

It should be understood that the terminal may store the seventh information in a memory of the terminal.

According to the communication method provided in FIG. 9, the device corresponding to the operator may generate the fifth identifier of the terminal and the credential information corresponding to the fifth identifier. Because the fifth identifier corresponds to the subscription permanent identifier of the terminal, the device corresponding to the operator may perform centralized management on information about the terminal.

In some possible embodiments, a node may upload information about the node and information that is about another node and that is generated by the node. The following provides descriptions with reference to a communication method in FIG. 10. As shown in FIG. 10, the communication method includes the following steps.

S1001: A device corresponding to a card manufacturer or terminal manufacturer obtains eighth information and ninth information.

The eighth information includes a seventh identifier indicating the device corresponding to the card manufacturer or terminal manufacturer, and credential information corresponding to the seventh identifier. The credential information corresponding to the seventh identifier is used to verify the device corresponding to the card manufacturer or terminal manufacturer and/or an attribute corresponding to the seventh identifier. The ninth information indicates an eighth identifier of a terminal and credential information corresponding to the eighth identifier. The credential information corresponding to the eighth identifier is used to verify the terminal and/or an attribute corresponding to the eighth identifier. The eighth identifier and the credential information corresponding to the eighth identifier are generated by the device corresponding to the card manufacturer or terminal manufacturer, in other words, the credential information corresponding to the eighth identifier is signed using a private key of the device corresponding to the card manufacturer or terminal manufacturer. The device corresponding to the card manufacturer or terminal manufacturer sends the eighth information and the ninth information to a storage node.

The device corresponding to the card manufacturer or terminal manufacturer may be a device corresponding to an operator. For example, the device corresponding to the card manufacturer or terminal manufacturer may be a device (a core network element) in a core network of the operator, or the device corresponding to the card manufacturer or terminal manufacturer may be an access network device of the operator.

For an implementation principle of the terminal, refer to related descriptions in the communication system provided in FIG. 1. Details are not described herein again. For implementation principles of the eighth information and the ninth information, refer to related descriptions of the information #2 in the solution provided in FIG. 4A and FIG. 4B. Details are not described herein again.

It may be understood that the device corresponding to the card manufacturer or terminal manufacturer may separately obtain the eighth information and the ninth information.

S1002: The device corresponding to the card manufacturer or terminal manufacturer sends the eighth information and the ninth information to a blockchain node.

It may be understood that the eighth information and the ninth information may be sent together, or may be separately sent. In other words, the eighth information and the ninth information may be carried in a same message or same signaling, or may be respectively carried in different messages or signaling.

S1003: The blockchain node stores the eighth information and the ninth information.

The eighth information and the ninth information may be stored by block.

S1004: The device corresponding to the card manufacturer or terminal manufacturer sends the ninth information to the terminal.

Optionally, the device corresponding to the card manufacturer or terminal manufacturer may further send a storage location of the ninth information to the terminal. The storage location of the ninth information and the ninth information may be carried in a same message, or may be carried in different messages. The storage location of the ninth information is determined after S1003 is performed. For example, the blockchain node may feed back information to the device corresponding to the card manufacturer or terminal manufacturer, to indicate the storage location of the ninth information, where the location may be a location in a blockchain system.

S1005: The terminal stores the ninth information.

It should be understood that the device corresponding to the card manufacturer or terminal manufacturer in the solution provided in FIG. 10 may alternatively be another device that can generate the ninth information, for example, the device corresponding to the operator. The terminal may alternatively be another device that can receive the ninth information. Details are not described herein again.

According to the method provided in FIG. 10, the device corresponding to the card manufacturer or terminal manufacturer may send the eighth information and the ninth information to the storage node, and the storage node may store the eighth information and the ninth information. The eighth identifier and the credential information corresponding to the eighth identifier are generated by the device corresponding to the card manufacturer or terminal manufacturer, the eighth identifier and the credential information corresponding to the eighth identifier are generated by the device corresponding to the card manufacturer or terminal manufacturer, and the credential information corresponding to the eighth identifier is signed using the private key of the device corresponding to the card manufacturer or terminal manufacturer. Therefore, when the device corresponding to the card manufacturer or terminal manufacturer is trusted, trustworthiness and interoperability of the eighth identifier and the credential information corresponding to the eighth identifier in different fields can be ensured.

It may be understood that the solution provided in FIG. 10 may further include S407 to S415 and/or S418 to S420 in the solution provided in FIG. 4A and FIG. 4B. When the solution provided in FIG. 10 includes S407 to S415 in the solution provided in FIG. 4A and FIG. 4B, for implementation principles of the information #1, the information #3, the information #4, and the information #5, refer to related descriptions of the information #2 in the solution provided in FIG. 4A and FIG. 4B. In other words, the information #1, the information #3, the information #4, or the information #5 may not include service information corresponding to an identifier.

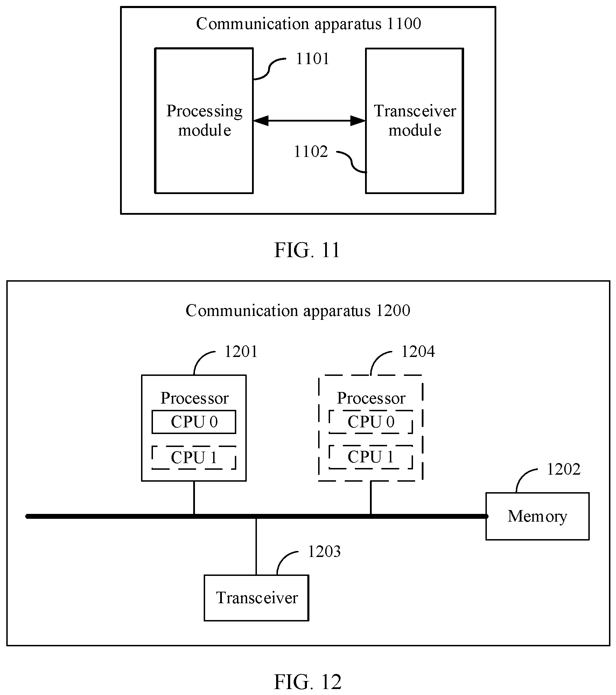

With reference to FIG. 3A to FIG. 10, the foregoing describes in detail the communication methods provided in embodiments of this application. With reference to FIG. 11 and FIG. 12, the following describes in detail communication apparatuses configured to perform the communication methods provided in embodiments of this application.

With reference to FIG. 2 to FIG. 10, the foregoing describes in detail the communication methods provided in embodiments of this application. With reference to FIG. 11 and FIG. 12, the following describes in detail communication apparatuses configured to perform the communication methods provided in embodiments of this application.

For example, FIG. 11 is a diagram 1 of a structure of a communication apparatus according to an embodiment of this application. As shown in FIG. 11, the communication apparatus 1100 includes a processing module 1101 and a transceiver module 1102. For ease of description, FIG. 11 shows only main parts of the communication apparatus 1100.

In some embodiments, the communication apparatus 1100 is applicable to the communication system shown in FIG. 1, and performs a function of a first node in the communication method shown in FIG. 2 or FIG. 4A and FIG. 4B.

The processing module 1101 is configured to obtain first information. The first information includes a first identifier and service information corresponding to the first identifier. The transceiver module 1102 is configured to send first information to a storage node.

In a possible implementation, the first node may include one or more of the following: a device corresponding to a card manufacturer or terminal manufacturer, a terminal, a device corresponding to an operator, a device corresponding to an authority, a device corresponding to a trusted third party, or an over-the-air provisioning server.

In a possible implementation, if the first node is the device corresponding to the card manufacturer or terminal manufacturer, the processing module 1101 is further configured to obtain second information. The second information indicates a second identifier of the terminal and credential information corresponding to the second identifier. The credential information corresponding to the second identifier is used to verify the terminal and/or an attribute corresponding to the second identifier. The second identifier and the credential information corresponding to the second identifier are generated by the first node. The transceiver module 1102 is further configured to send the second information and/or a hash value of the second information to the storage node.

In a possible implementation, the credential information corresponding to the second identifier includes authentication information corresponding to the second identifier and/or attestation information corresponding to the second identifier, the authentication information corresponding to the second identifier is used to verify the terminal, and the attestation information corresponding to the second identifier is used to verify the attribute corresponding to the second identifier.

In a possible implementation, the second information includes the second identifier and one or more of the following: the credential information corresponding to the second identifier, service information corresponding to the second identifier, information indicating a type of the terminal, information of an issuer of the second identifier, or information indicating a disclosure condition of the credential information corresponding to the second identifier.

In a possible implementation, the second identifier and the credential information corresponding to the second identifier are carried in identification information corresponding to the second identifier; or the second identifier is carried in identification information corresponding to the second identifier, and one or more of the following are carried in profile information corresponding to the second identifier: the credential information corresponding to the second identifier, the service information corresponding to the second identifier, the information indicating the type of the terminal, the information of the issuer of the second identifier, or the information indicating the disclosure condition of the credential information corresponding to the second identifier.

In a possible implementation, the identification information corresponding to the second identifier includes a first field and one or both of the following: a second field or a third field, where information carried in the first field indicates the second identifier, information carried in the second field indicates an identifier type of the second identifier, and information carried in the third field is used to check information carried in a field, other than the third field, in the identification information corresponding to the second identifier.

In a possible implementation, the transceiver module 1102 is further configured to send third information to the terminal. The third information indicates the second information, or the third information indicates the second information and a storage location of the second information in a storage system.

In a possible implementation, if the first node is the terminal, the transceiver module 1102 is further configured to receive fourth information from the device corresponding to the card manufacturer or terminal manufacturer. The fourth information indicates the first identifier and credential information corresponding to the first identifier; or the fourth information indicates the first identifier, credential information corresponding to the first identifier, and a storage location of the first identifier and the credential information corresponding to the first identifier in a storage system.

In a possible implementation, the transceiver module 1102 is further configured to send fifth information and/or a hash value of the fifth information to the storage node. The fifth information indicates a third identifier of the first node and credential information corresponding to the third identifier, and the third identifier is different from the first identifier.

In a possible implementation, if the first node is the terminal, the transceiver module 1102 is further configured to send attestation request information to the device corresponding to the card manufacturer or terminal manufacturer. The attestation request information is used to request attestation information corresponding to the first node, and the attestation information corresponding to the first node is used to verify either the first node or an attribute corresponding to an identifier of the first node. The transceiver module 1102 is further configured to receive the attestation information corresponding to the first node. The attestation information corresponding to the first node is generated by the device corresponding to the card manufacturer or terminal manufacturer.

In a possible implementation, if the first node is the device corresponding to the card manufacturer or terminal manufacturer, the transceiver module 1102 is further configured to receive attestation request information from the terminal. The attestation request information is used to request attestation information corresponding to the terminal, and the attestation information corresponding to the terminal is used to verify the terminal or an attribute corresponding to an identifier of the terminal. The transceiver module 1102 is further configured to send, to the storage node, the attestation information corresponding to the terminal. The transceiver module 1102 is further configured to send, to the terminal, the attestation information corresponding to the terminal.

Optionally, the transceiver module 1102 may include a receiving module and a sending module (not shown in FIG. 11). The transceiver module 1102 is configured to implement a sending function and a receiving function of the communication apparatus 1100.

Optionally, the communication apparatus 1100 may further include a storage module (not shown in FIG. 11). The storage module stores a program or instructions. When the processing module 1101 executes the program or the instructions, the communication apparatus 1100 is enabled to perform the function of the first node in the communication method shown in FIG. 2 or FIG. 4A and FIG. 4B.

It should be understood that the processing module 1101 in the communication apparatus 1100 may be implemented by a processor or a processor-related circuit component, and may be a processor or a processing unit. The transceiver module 1102 may be implemented by a transceiver or a transceiver-related circuit component, and may be a transceiver or a transceiver unit.

It should be noted that the communication apparatus 1100 may be a terminal or network device, or may be a chip (system), another part or component, or a software module that may be disposed in the terminal or network device, or may be an apparatus including the terminal or network device. This is not limited in this application.

In addition, for technical effect of the communication apparatus 1100, refer to the technical effect of the communication method shown in any one of the possible designs of FIG. 2 or FIG. 4A and FIG. 4B. Details are not described herein again.

In some embodiments, the communication apparatus 1100 is applicable to the communication system shown in FIG. 1, and performs a function of a storage node in the communication method shown in FIG. 2, FIG. 4A and FIG. 4B, or FIG. 8.

The processing module 1101 is configured to receive first information from a first node via the transceiver module 1102. The first information includes a first identifier and service information corresponding to the first identifier. The processing module 1101 is configured to store the first information.

In a possible implementation, the first node may include one or more of the following: a device corresponding to a card manufacturer or terminal manufacturer, a terminal, a device corresponding to an operator, a device corresponding to an authority, a device corresponding to a trusted third party, or an over-the-air provisioning server.

In a possible implementation, if the first node includes the device corresponding to the card manufacturer or terminal manufacturer, the transceiver module 1102 is further configured to receive second information from the first node. The second information indicates a second identifier of the terminal and credential information corresponding to the second identifier. The credential information corresponding to the second identifier is used to verify the terminal and/or an attribute corresponding to the second identifier. The second identifier and the credential information corresponding to the second identifier are generated by the first node. The processing module 1101 is further configured to store the fourth information.

In a possible implementation, the credential information corresponding to the second identifier includes authentication information corresponding to the second identifier and/or attestation information corresponding to the second identifier, the authentication information corresponding to the second identifier is used to verify the terminal, and the attestation information corresponding to the second identifier is used to verify the attribute corresponding to the second identifier.

In a possible implementation, the second information includes the second identifier and one or more of the following: the credential information corresponding to the second identifier, service information corresponding to the second identifier, information indicating a type of the terminal, information of an issuer of the second identifier, or information indicating a disclosure condition of the credential information corresponding to the second identifier.

In a possible implementation, the second identifier and the credential information corresponding to the second identifier are carried in identification information corresponding to the second identifier; or the second identifier is carried in identification information corresponding to the second identifier, and one or more of the following are carried in profile information corresponding to the second identifier: the credential information corresponding to the second identifier, the service information corresponding to the second identifier, the information indicating the type of the terminal, the information of the issuer of the second identifier, or the information indicating the disclosure condition of the credential information corresponding to the second identifier.

In a possible implementation, the identification information corresponding to the second identifier includes a first field and one or both of the following: a second field or a third field, where information carried in the first field indicates the second identifier, information carried in the second field indicates an identifier type of the second identifier, and information carried in the third field is used to check information carried in a field, other than the third field, in the identification information corresponding to the second identifier.

In a possible implementation, the storage node receives fifth information from the first node. The fifth information indicates a third identifier of the first node and credential information corresponding to the third identifier.

In a possible implementation, if the first node includes the device corresponding to the card manufacturer or terminal manufacturer, the transceiver module 1102 is further configured to receive attestation information that corresponds to the terminal and that is from the first node. The attestation information corresponding to the terminal is used to verify the terminal or an attribute corresponding to an identifier of the terminal.

In a possible implementation, the transceiver module 1102 is further configured to receive sixth information from a second node. The sixth information indicates a fourth identifier of the second node and credential information corresponding to the fourth identifier. The credential information corresponding to the fourth identifier is used to verify the second node and/or an attribute corresponding to the fourth identifier. The fourth identifier and the credential information corresponding to the fourth identifier are generated by the first node. The processing module 1101 is further configured to store the sixth information.

In a possible implementation, the credential information corresponding to the fourth identifier includes authentication information corresponding to the fourth identifier and/or attestation information corresponding to the fourth identifier, the authentication information corresponding to the fourth identifier is used to verify the second node, and the attestation information corresponding to the fourth identifier is used to verify the attribute corresponding to the fourth identifier.

In a possible implementation, the sixth information includes the fourth identifier and one or more of the following: the credential information corresponding to the fourth identifier, service information corresponding to the fourth identifier, information indicating a type of the second node, information of an issuer of the fourth identifier, or information indicating a disclosure condition of the credential information corresponding to the fourth identifier.

In a possible implementation, the fourth identifier and the credential information corresponding to the fourth identifier are carried in identification information corresponding to the fourth identifier. Alternatively, the fourth identifier is carried in identification information corresponding to the second identifier, and one or more of the following are carried in profile information corresponding to the fourth identifier: the credential information corresponding to the fourth identifier, the service information corresponding to the fourth identifier, the information indicating the type of the second node, the information of the issuer of the fourth identifier, or the information indicating the disclosure condition of the credential information corresponding to the fourth identifier.

In a possible implementation, the identification information corresponding to the fourth identifier includes a fourth field and one or both of the following: a fifth field or a sixth field, where information carried in the fourth field indicates the fourth identifier, information carried in the fifth field indicates an identifier type of the fourth identifier, and information carried in the sixth field is used to check information carried in a field, other than the sixth field, in the identification information corresponding to the fourth identifier.

Optionally, the transceiver module 1102 may include a receiving module and a sending module (not shown in FIG. 11). The transceiver module 1102 is configured to implement a sending function and a receiving function of the communication apparatus 1100.

Optionally, the communication apparatus 1100 may further include a storage module (not shown in FIG. 11). The storage module stores a program or instructions. When the processing module 1101 executes the program or the instructions, the communication apparatus 1100 is enabled to perform the function of the storage node in the communication method shown in FIG. 2, FIG. 4A and FIG. 4B, or FIG. 8.

It should be understood that the processing module 1101 in the communication apparatus 1100 may be implemented by a processor or a processor-related circuit component, and may be a processor or a processing unit. The transceiver module 1102 may be implemented by a transceiver or a transceiver-related circuit component, and may be a transceiver or a transceiver unit.

It should be noted that the communication apparatus 1100 may be a terminal or network device, or may be a chip (system), another part or component, or a software module that may be disposed in the terminal or network device, or may be an apparatus including the terminal or network device. This is not limited in this application.

In addition, for technical effect of the communication apparatus 1100, refer to the technical effect of the communication method shown in any one of the possible designs of FIG. 2, FIG. 4A and FIG. 4B, or FIG. 8. Details are not described herein again.

In a possible implementation, the service information corresponding to the first identifier is used to generate attestation information of a third node and/or authentication information of the third node; and/or the service information corresponding to the first identifier is used to verify the attestation information of the third node and/or the authentication information of the third node; and/or the service information corresponding to the first identifier is used to provide one or more of the following services for the third node: a subscription service, a network access service, or a data sharing service. The third node is different from the first node, credential information of the third node is used to verify the third node, and the attestation information of the third node is used to verify an attribute corresponding to an identifier of the third node.

In a possible implementation, the first information further indicates credential information corresponding to the first identifier, and the credential information corresponding to the first identifier is used to verify the first node and/or an attribute corresponding to the first identifier.

In a possible implementation, the credential information corresponding to the first identifier includes authentication information corresponding to the first identifier and/or attestation information corresponding to the first identifier, the authentication information corresponding to the first identifier is used to verify the first node, and the attestation information corresponding to the first identifier is used to verify an attribute corresponding to the first node.

In a possible implementation, the first information includes the first identifier, the service information corresponding to the first identifier, and one or more of the following: information indicating a type of the first node, information of an issuer of the first identifier, or information indicating a disclosure condition of the credential information corresponding to the first identifier.

In a possible implementation, the first identifier and the credential information corresponding to the first identifier are carried in identification information corresponding to the first identifier. Alternatively, the first identifier is carried in identification information corresponding to the first identifier, and one or more of the following are carried in profile information corresponding to the first identifier: the credential information corresponding to the first identifier, the service information corresponding to the first identifier, information indicating the type of the terminal, information of an issuer of the first identifier, or information indicating a disclosure condition of the credential information corresponding to the first identifier.

In a possible implementation, the attestation information corresponding to the first identifier is generated by a fourth node based on service information corresponding to the fourth node, the attestation information corresponding to the first identifier is signed using a private key corresponding to the fourth node, and the fourth node is different from the first node.

In a possible implementation, the service information corresponding to the fourth node is used to generate service result information, the service result information includes credential information of a fifth node, the fifth node is different from the fourth node, and the credential information of the fifth node is used to verify the fifth node and/or an attribute corresponding to an identifier of the fifth node.

In a possible implementation, the identification information corresponding to the first identifier is information signed using a private key that corresponds to an identifier of the first node and that is generated by the card manufacturer or the terminal manufacturer.

In a possible implementation, the storage node is one or more of the following: a blockchain node, a distributed storage node, or a communication device; and the communication device is different from the first node.

In some embodiments, the communication apparatus 1100 is applicable to the communication system shown in FIG. 1, and performs a function of a terminal in the communication method shown in FIG. 8.

The processing module 1101 is configured to obtain sixth information. The sixth information indicates a fourth identifier of the second node and credential information corresponding to the fourth identifier. The credential information corresponding to the fourth identifier is used to verify the second node and/or an attribute corresponding to the fourth identifier. The fourth identifier and the credential information corresponding to the fourth identifier are generated by a first node. The transceiver module 1102 is configured to send the sixth information and/or a hash value of the sixth information to a storage node.

In a possible implementation, the credential information corresponding to the fourth identifier includes authentication information corresponding to the fourth identifier and/or attestation information corresponding to the fourth identifier, the authentication information corresponding to the fourth identifier is used to verify the second node, and the attestation information corresponding to the fourth identifier is used to verify the attribute corresponding to the fourth identifier.

In a possible implementation, the sixth information includes the fourth identifier and one or more of the following: the credential information corresponding to the fourth identifier, service information corresponding to the fourth identifier, information indicating a type of the second node, information of an issuer of the fourth identifier, or information indicating a disclosure condition of the credential information corresponding to the fourth identifier.

In a possible implementation, the fourth identifier and the credential information corresponding to the fourth identifier are carried in identification information corresponding to the fourth identifier; or the fourth identifier is carried in identification information corresponding to the second identifier, and one or more of the following are carried in profile information corresponding to the fourth identifier: the credential information corresponding to the fourth identifier, the service information corresponding to the fourth identifier, the information indicating the type of the second node, the information of the issuer of the fourth identifier, or the information indicating the disclosure condition of the credential information corresponding to the fourth identifier.

Optionally, the identification information corresponding to the fourth identifier includes a fourth field and one or both of the following: a fifth field or a sixth field, where information carried in the fourth field indicates the fourth identifier, information carried in the fifth field indicates an identifier type of the fourth identifier, and information carried in the sixth field is used to check information carried in a field, other than the sixth field, in the identification information corresponding to the fourth identifier.

In a possible implementation, the storage node is one or more of the following: a blockchain node, a distributed storage node, or an electronic device; and the electronic device is different from the first node.

Optionally, the transceiver module 1102 may include a receiving module and a sending module (not shown in FIG. 11). The transceiver module 1102 is configured to implement a sending function and a receiving function of the communication apparatus 1100.

Optionally, the communication apparatus 1100 may further include a storage module (not shown in FIG. 11). The storage module stores a program or instructions. When the processing module 1101 executes the program or the instructions, the communication apparatus 1100 is enabled to perform a function of the storage node in the communication method shown in FIG. 8.

It should be understood that the processing module 1101 in the communication apparatus 1100 may be implemented by a processor or a processor-related circuit component, and may be a processor or a processing unit. The transceiver module 1102 may be implemented by a transceiver or a transceiver-related circuit component, and may be a transceiver or a transceiver unit.

It should be noted that the communication apparatus 1100 may be a terminal, or may be a chip (system), another part or component, or a software module that may be disposed in the terminal, or may be an apparatus including the terminal. This is not limited in this application.

In addition, for technical effect of the communication apparatus 1100, refer to the technical effect of the communication method shown in any one of the possible designs of FIG. 8. Details are not described herein again.

In some embodiments, the communication apparatus 1100 is applicable to the communication system shown in FIG. 1, and performs a function of a device corresponding to an operator in the communication method shown in FIG. 9.

The processing module 1101 is configured to obtain seventh information. The seventh information indicates a fifth identifier of a terminal and credential information corresponding to the fifth identifier, the credential information corresponding to the fifth identifier is used to verify the terminal and/or an attribute corresponding to the fifth identifier, the fifth identifier is different from a subscription permanent identifier of the terminal in the device corresponding to the operator, the fifth identifier corresponds to the subscription permanent identifier of the terminal, and the subscription permanent identifier is used for communication between the device corresponding to the operator and the terminal. The transceiver module 1102 is configured to send the seventh information to the terminal.

Optionally, the transceiver module 1102 may include a receiving module and a sending module (not shown in FIG. 11). The transceiver module 1102 is configured to implement a sending function and a receiving function of the communication apparatus 1100.

Optionally, the communication apparatus 1100 may further include a storage module (not shown in FIG. 11). The storage module stores a program or instructions. When the processing module 1101 executes the program or the instructions, the communication apparatus 1100 is enabled to perform a function of a storage node in the communication method shown in FIG. 9.

It should be understood that the processing module 1101 in the communication apparatus 1100 may be implemented by a processor or a processor-related circuit component, and may be a processor or a processing unit. The transceiver module 1102 may be implemented by a transceiver or a transceiver-related circuit component, and may be a transceiver or a transceiver unit.

It should be noted that the communication apparatus 1100 may be a network device, or may be a chip (system), another part or component, or a software module that may be disposed in the network device, or may be an apparatus including the network device. This is not limited in this application.

In addition, for technical effect of the communication apparatus 1100, refer to the technical effect of the communication method shown in any one of the possible designs of FIG. 9. Details are not described herein again.

In some embodiments, the communication apparatus 1100 is applicable to the communication system shown in FIG. 1, and performs a function of a terminal in the communication method shown in FIG. 9.

The transceiver module 1102 is configured to receive seventh information from a device corresponding to an operator. The seventh information indicates a fifth identifier of the terminal and credential information corresponding to the fifth identifier, the credential information corresponding to the fifth identifier is used to verify the terminal and/or an attribute corresponding to the fifth identifier, the fifth identifier is different from a subscription permanent identifier of the terminal, the fifth identifier corresponds to the subscription permanent identifier of the terminal, and the subscription permanent identifier is used for communication between the device corresponding to the operator and the terminal. The processing module 1101 is configured to store the seventh information.

Optionally, the transceiver module 1102 may include a receiving module and a sending module (not shown in FIG. 11). The transceiver module 1102 is configured to implement a sending function and a receiving function of the communication apparatus 1100.

Optionally, the communication apparatus 1100 may further include a storage module (not shown in FIG. 11). The storage module stores a program or instructions. When the processing module 1101 executes the program or the instructions, the communication apparatus 1100 is enabled to perform a function of a storage node in the communication method shown in FIG. 9.

It should be understood that the processing module 1101 in the communication apparatus 1100 may be implemented by a processor or a processor-related circuit component, and may be a processor or a processing unit. The transceiver module 1102 may be implemented by a transceiver or a transceiver-related circuit component, and may be a transceiver or a transceiver unit.

It should be noted that the communication apparatus 1100 may be a terminal, or may be a chip (system), another part or component, or a software module that may be disposed in the terminal, or may be an apparatus including the terminal. This is not limited in this application.

In addition, for technical effect of the communication apparatus 1100, refer to the technical effect of the communication method shown in any one of the possible designs of FIG. 9. Details are not described herein again.

In a possible implementation, the credential information corresponding to the fifth identifier includes authentication information corresponding to the fifth identifier and/or attestation information corresponding to the fifth identifier, the authentication information corresponding to the fifth identifier is used to verify the terminal, and the attestation information corresponding to the fifth identifier is used to verify an attribute corresponding to the terminal.

In a possible implementation, the seventh information includes the fifth identifier and one or more of the following: the credential information corresponding to the fifth identifier, the attestation information corresponding to the fifth identifier, information indicating a type of the terminal, information of an issuer of the fifth identifier, or information indicating a disclosure condition of the credential information corresponding to the fifth identifier.

In a possible implementation, the fifth identifier and the credential information corresponding to the fifth identifier are carried in identification information corresponding to the fifth identifier; or one or more of the following are carried in profile information corresponding to the fifth identifier: the credential information corresponding to the fifth identifier, service information corresponding to the fifth identifier, the information indicating the type of the terminal, the information of the issuer of the fifth identifier, or the information indicating the disclosure condition of the credential information corresponding to the fifth identifier.

In a possible implementation, the identification information corresponding to the fifth identifier includes a seventh field and one or both of the following: an eighth field or a ninth field, where information carried in the seventh field indicates the fifth identifier, information carried in the eighth field indicates an identifier type of the fifth identifier, and information carried in the ninth field is used to check information carried in a field, other than the ninth field, in the identification information corresponding to the fifth identifier.

In some embodiments, the communication apparatus 1100 is applicable to the communication system shown in FIG. 1, and performs a function of a device corresponding to a card manufacturer or terminal manufacturer in the communication method shown in FIG. 2.

The processing module 1101 is configured to obtain eighth information and ninth information. The eighth information includes a seventh identifier indicating the device corresponding to the card manufacturer or terminal manufacturer, and credential information corresponding to the seventh identifier. The credential information corresponding to the seventh identifier is used to verify the device corresponding to the card manufacturer or terminal manufacturer and/or an attribute corresponding to the seventh identifier. The ninth information indicates an eighth identifier of a terminal and credential information corresponding to the eighth identifier. The credential information corresponding to the eighth identifier is used to verify the terminal and/or an attribute corresponding to the eighth identifier. The eighth identifier and the credential information corresponding to the eighth identifier are generated by the device corresponding to the card manufacturer or terminal manufacturer, in other words, the credential information corresponding to the eighth identifier is signed using a private key of the device corresponding to the card manufacturer or terminal manufacturer. The transceiver module 1102 is configured to send the eighth information and the ninth information to a storage node.

In a possible implementation, the transceiver module 1102 is further configured to send the ninth information to the terminal.

Optionally, the transceiver module 1102 may include a receiving module and a sending module (not shown in FIG. 11). The transceiver module 1102 is configured to implement a sending function and a receiving function of the communication apparatus 1100.

Optionally, the communication apparatus 1100 may further include a storage module (not shown in FIG. 11). The storage module stores a program or instructions. When the processing module 1101 executes the program or the instructions, the communication apparatus 1100 is enabled to perform a function of the storage node in the communication method shown in FIG. 10.

It should be understood that the processing module 1101 in the communication apparatus 1100 may be implemented by a processor or a processor-related circuit component, and may be a processor or a processing unit. The transceiver module 1102 may be implemented by a transceiver or a transceiver-related circuit component, and may be a transceiver or a transceiver unit.

It should be noted that the communication apparatus 1100 may be a terminal or network device, or may be a chip (system), another part or component, or a software module that may be disposed in the terminal or network device, or may be an apparatus including the terminal or network device. This is not limited in this application.

In addition, for technical effect of the communication apparatus 1100, refer to the technical effect of the communication method shown in any one of the possible designs of FIG. 10. Details are not described herein again.

In some embodiments, the communication apparatus 1100 is applicable to the communication system shown in FIG. 1, and performs a function of a storage node in the communication method shown in FIG. 10.

The transceiver module 1102 is configured to receive eighth information and ninth information. The eighth information includes a seventh identifier indicating a device corresponding to a card manufacturer or terminal manufacturer, and credential information corresponding to the seventh identifier. The credential information corresponding to the seventh identifier is used to verify the device corresponding to the card manufacturer or terminal manufacturer and/or an attribute corresponding to the seventh identifier. The ninth information indicates an eighth identifier of a terminal and credential information corresponding to the eighth identifier. The credential information corresponding to the eighth identifier is used to verify the terminal and/or an attribute corresponding to the eighth identifier. The eighth identifier and the credential information corresponding to the eighth identifier are generated by the device corresponding to the card manufacturer or terminal manufacturer, in other words, the credential information corresponding to the eighth identifier is signed using a private key of the device corresponding to the card manufacturer or terminal manufacturer. The processing module 1101 is configured to store the eighth information and the ninth information.

In a possible implementation, the transceiver module 1102 is further configured to receive the eighth information and the ninth information from the device corresponding to the card manufacturer or terminal manufacturer.

In a possible implementation, the transceiver module 1102 is further configured to: receive the eighth information from the device corresponding to the card manufacturer or terminal manufacturer, and receive the ninth information from the terminal.

Optionally, the transceiver module 1102 may include a receiving module and a sending module (not shown in FIG. 11). The transceiver module 1102 is configured to implement a sending function and a receiving function of the communication apparatus 1100.

Optionally, the communication apparatus 1100 may further include a storage module (not shown in FIG. 11). The storage module stores a program or instructions. When the processing module 1101 executes the program or the instructions, the communication apparatus 1100 is enabled to perform the function of the storage node in the communication method shown in FIG. 10.

It should be understood that the processing module 1101 in the communication apparatus 1100 may be implemented by a processor or a processor-related circuit component, and may be a processor or a processing unit. The transceiver module 1102 may be implemented by a transceiver or a transceiver-related circuit component, and may be a transceiver or a transceiver unit.

It should be noted that the communication apparatus 1100 may be a terminal or network device, or may be a chip (system), another part or component, or a software module that may be disposed in the terminal or network device, or may be an apparatus including the terminal or network device. This is not limited in this application.

In addition, for technical effect of the communication apparatus 1100, refer to the technical effect of the communication method shown in any one of the possible designs of FIG. 10. Details are not described herein again.

For example, FIG. 12 is a diagram of a structure of a communication apparatus according to an embodiment of this application. The communication apparatus may be a terminal or network device, or may be a chip (system), another part or component, or a software module that may be disposed in the terminal or network device. As shown in FIG. 12, the communication apparatus 1200 may include a processor 1201. Optionally, the communication apparatus 1200 may further include a memory 1202 and/or a transceiver 1203. The processor 1201 is coupled to the memory 1202 and the transceiver 1203, for example, may be connected through a communication bus.

The following specifically describes each part of the communication apparatus 1200 with reference to FIG. 12.

The processor 1201 is a control center of the communication apparatus 1200; and may be one processor, or may be a collective name of a plurality of processing elements. For example, the processor 1201 is one or more central processing units (central processing unit, CPU) or an application-specific integrated circuit (application-specific integrated circuit, ASIC), or may be configured as one or more integrated circuits implementing embodiments of this application, for example, one or more digital signal processors (digital signal processor, DSP) or one or more field programmable gate arrays (field programmable gate array, FPGA).

Optionally, the processor 1201 may run or execute a software program stored in the memory 1202, and invoke data stored in the memory 1202, to perform various functions of the communication apparatus 1200.

During specific implementation, in an embodiment, the processor 1201 may include one or more CPUs, for example, a CPU 0 and a CPU 1 that are shown in FIG. 12.

During specific implementation, in an embodiment, the communication apparatus 1200 may alternatively include a plurality of processors, for example, the processor 1201 and a processor 1204 shown in FIG. 12. Each of these processors may be a single-core processor (single-CPU), or may be a multi-core processor (multi-CPU). The processor herein may be one or more devices, circuits, and/or processing cores configured to process data (for example, computer program instructions).

The memory 1202 is configured to store the software program for performing the solutions in this application, and the processor 1201 controls execution. For a specific implementation, refer to the foregoing method embodiments. Details are not described herein again.

Optionally, the memory 1202 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or any other medium that can carry or store expected program code in a form of an instruction or a data structure and that can be accessed by a computer, but is not limited thereto. The memory 1202 may be integrated with the processor 1201, or may exist independently, and is coupled to the processor 1201 through an interface circuit (not shown in FIG. 12) of the communication apparatus 1200. This is not specifically limited in embodiments of this application.

The transceiver 1203 is configured for communication with another communication apparatus. For example, the communication apparatus 1200 is a terminal, and the transceiver 1203 may be configured to communicate with a network device or communicate with another terminal. For another example, the communication apparatus 1200 is a network device, and the transceiver 1203 may be configured to communicate with a terminal or communicate with another network device.

Optionally, the transceiver 1203 may include a receiver and a transmitter (not separately shown in FIG. 12). The receiver is configured to implement a receiving function, and the transmitter is configured to implement a sending function.

Optionally, the transceiver 1203 may be integrated with the processor 1201, or may exist independently, and is coupled to the processor 1201 through an interface circuit (not shown in FIG. 12) of the communication apparatus 1200. This is not specifically limited in embodiments of this application.

It should be noted that the structure of the communication apparatus 1200 shown in FIG. 12 does not constitute a limitation on the communication apparatus. An actual communication apparatus may include more or fewer parts than those shown in the figure, combine some parts, or have different part arrangements.

In addition, for technical effect of the communication apparatus 1200, refer to the technical effect of the communication methods in the foregoing method embodiments. Details are not described herein again.

An embodiment of this application provides a communication system. The communication system includes one or more terminals and one or more network devices described above.

It should be understood that, in embodiments of this application, the processor may be a CPU, or may be another general-purpose processor, a DSP, an ASIC, an FPGA or another programmable logic device, a discrete gate or transistor logic device, a discrete hardware component, or the like. The general-purpose processor may be a microprocessor, or the processor may be any conventional processor or the like.

It may be understood that the memory in embodiments of this application may be a volatile memory or a nonvolatile memory, or may include a volatile memory and a nonvolatile memory. The nonvolatile memory may be a ROM, a programmable read-only memory (programmable ROM, PROM), an erasable programmable read-only memory (erasable PROM, EPROM), an EEPROM, or a flash memory. The volatile memory may be a RAM, and may serve as an external cache. By way of example but not limitative description, a plurality of forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented by software, hardware (for example, a circuit), firmware, or any combination thereof. When software is used to implement embodiments, the foregoing embodiments may be implemented totally or partially in a form of a computer program product. The computer program product includes one or more computer instructions or computer programs. When the computer instructions or the computer programs are loaded and executed on a computer, the procedure or functions according to embodiments of this application are totally or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association relationship between associated objects and indicates that three relationships may exist. For example, A and/or B may indicate the following three cases: only A exists, both A and B exist, and only B exists. A and B may be singular or plural. In addition, the character "/" in this specification usually indicates an "or" relationship between the associated objects, but may also indicate an "and/or" relationship. For details, refer to the context for understanding.

In this application, "at least one" means one or more, and "a plurality of" means two or more. "At least one of the following items (pieces)" or a similar expression thereof means any combination of these items, including a singular item (piece) or any combination of plural items (pieces). For example, at least one item (piece) of a, b, or c may indicate: a, b, c, a-b, a-c, b-c, or a-b-c, where a, b, and c may be singular or plural.

It should be understood that sequence numbers of the foregoing processes do not mean execution sequences in embodiments of this application. The execution sequences of the processes should be determined based on functions and internal logic of the processes, and should not constitute any limitation on implementation processes of embodiments of this application.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that this implementation goes beyond the scope of this application.

It may be clearly understood by a person skilled in the art that, for ease and brevity of description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in another manner. For example, the described apparatus embodiments are merely examples. For example, division into the units is merely logic function division. There may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electrical form, a mechanical form, or another form.

The units described as separate parts may or may not be physically separate, and parts displayed as units may or may not be physical units, may be located in one place, or may be distributed on a plurality of network units. Some or all of the units may be selected based on actual requirements to achieve the objectives of the solutions in embodiments.

In addition, functional units in embodiments of this application may be integrated into one processing unit, or each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, for example, a USB flash drive, a removable hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, applied to a first node, wherein the method comprises:
obtaining first information, wherein the first information indicates a first identifier and service information corresponding to the first identifier; and
sending the first information to a storage node.

2. The method according to claim 1, wherein the first node may comprise one or more of the following:
a device corresponding to a card manufacturer or terminal manufacturer, a terminal, a device corresponding to an operator, a device corresponding to an authority, a device corresponding to a trusted third party, or an over-the-air provisioning server.

3. The method according to claim 2, wherein if the first node is the device corresponding to the card manufacturer or terminal manufacturer, the method further comprises:
obtaining second information, wherein the second information indicates a second identifier of the terminal and credential information corresponding to the second identifier, the credential information corresponding to the second identifier is used to verify the terminal and/or an attribute corresponding to the second identifier, and the second identifier and the credential information corresponding to the second identifier are generated by the first node; and
sending the second information and/or a hash value of the second information to the storage node.

4. The method according to claim 3, wherein the credential information corresponding to the second identifier comprises authentication information corresponding to the second identifier and/or attestation information corresponding to the second identifier, the authentication information corresponding to the second identifier is used to verify the terminal, and the attestation information corresponding to the second identifier is used to verify the attribute corresponding to the second identifier.

5. The method according to claim 3 or 4, wherein the second information comprises the second identifier and one or more of the following:
the credential information corresponding to the second identifier, service information corresponding to the second identifier, information indicating a type of the terminal, information of an issuer of the second identifier, or information indicating a disclosure condition of the credential information corresponding to the second identifier.

6. The method according to claim 5, wherein the second identifier and the credential information corresponding to the second identifier are carried in identification information corresponding to the second identifier; or the second identifier is carried in identification information corresponding to the second identifier, and one or more of the following are carried in profile information corresponding to the second identifier: the credential information corresponding to the second identifier, the service information corresponding to the second identifier, the information indicating the type of the terminal, the information of the issuer of the second identifier, or the information indicating the disclosure condition of the credential information corresponding to the second identifier.

7. The method according to claim 6, wherein the identification information corresponding to the second identifier comprises a first field and one or both of the following: a second field or a third field, wherein information carried in the first field indicates the second identifier, information carried in the second field indicates an identifier type of the second identifier, and information carried in the third field is used to check information carried in a field, other than the third field, in the identification information corresponding to the second identifier.

8. The method according to any one of claims 3 to 7, wherein the method further comprises:
sending third information to the terminal, wherein the third information indicates the second information, or the third information indicates the second information and a storage location of the second information in a storage system.

9. The method according to claim 2, wherein if the first node is the terminal, the method further comprises:
receiving fourth information from the device corresponding to the card manufacturer or terminal manufacturer, wherein the fourth information indicates the first identifier and credential information corresponding to the first identifier; or the fourth information indicates the first identifier, credential information corresponding to the first identifier, and a storage location of the first identifier and the credential information corresponding to the first identifier in the storage node.

10. The method according to claim 1, 2, or 9, wherein the method further comprises:
sending fifth information and/or a hash value of the fifth information to the storage node, wherein the fifth information indicates a third identifier of the first node and credential information corresponding to the third identifier, and the third identifier is different from the first identifier.

11. The method according to claim 2, wherein if the first node is the terminal, the method further comprises:
sending attestation request information to the device corresponding to the card manufacturer or terminal manufacturer, wherein the attestation request information is used to request attestation information corresponding to the first node, and the attestation information corresponding to the first node is used to verify either the first node or an attribute corresponding to an identifier of the first node; and
receiving the attestation information corresponding to the first node, wherein the attestation information corresponding to the first node is generated by the device corresponding to the card manufacturer or terminal manufacturer.

12. The method according to claim 2, wherein if the first node is the device corresponding to the card manufacturer or terminal manufacturer, the method further comprises:
receiving attestation request information from the terminal, wherein the attestation request information is used to request attestation information corresponding to the terminal, and the attestation information corresponding to the terminal is used to verify the terminal or an attribute corresponding to an identifier of the terminal;
sending, to the storage node, the attestation information corresponding to the terminal; and
sending, to the terminal, the attestation information corresponding to the terminal.

13. A communication method, applied to a storage node, wherein the method comprises:
receiving, by the storage node, first information from a first node, wherein the first information comprises a first identifier and service information corresponding to the first identifier; and
storing, by the storage node, the first information.

14. The method according to claim 13, wherein the first node may comprise one or more of the following:
a device corresponding to a card manufacturer or terminal manufacturer, a terminal, a device corresponding to an operator, a device corresponding to an authority, a device corresponding to a trusted third party, or an over-the-air provisioning server.

15. The method according to claim 14, wherein if the first node comprises the device corresponding to the card manufacturer or terminal manufacturer, the method further comprises:
receiving, by the storage node, second information from the first node, wherein the second information indicates a second identifier of the terminal and credential information corresponding to the second identifier, the credential information corresponding to the second identifier is used to verify the terminal and/or an attribute corresponding to the second identifier, and the second identifier and the credential information corresponding to the second identifier are generated by the first node; and
storing, by the storage node, the second information.

16. The method according to claim 15, wherein the credential information corresponding to the second identifier comprises authentication information corresponding to the second identifier and/or attestation information corresponding to the second identifier, the authentication information corresponding to the second identifier is used to verify the terminal, and the attestation information corresponding to the second identifier is used to verify the attribute corresponding to the second identifier.

17. The method according to claim 15 or 16, wherein the second information comprises the second identifier and one or more of the following:
the credential information corresponding to the second identifier, service information corresponding to the second identifier, information indicating a type of the terminal, information of an issuer of the second identifier, or information indicating a disclosure condition of the credential information corresponding to the second identifier.

18. The method according to claim 17, wherein the second identifier and the credential information corresponding to the second identifier are carried in identification information corresponding to the second identifier; or the second identifier is carried in identification information corresponding to the second identifier, and one or more of the following are carried in profile information corresponding to the second identifier: the credential information corresponding to the second identifier, the service information corresponding to the second identifier, the information indicating the type of the terminal, the information of the issuer of the second identifier, or the information indicating the disclosure condition of the credential information corresponding to the second identifier.

19. The method according to claim 18, wherein the identification information corresponding to the second identifier comprises a first field and one or both of the following: a second field or a third field, wherein information carried in the first field indicates the second identifier, information carried in the second field indicates an identifier type of the second identifier, and information carried in the third field is used to check information carried in a field, other than the third field, in the identification information corresponding to the second identifier.

20. The method according to claim 13 or 14, wherein the method further comprises:
receiving, by the storage node, fifth information from the first node, wherein the fifth information indicates a third identifier of the first node and credential information corresponding to the third identifier.

21. The method according to claim 14, wherein if the first node comprises the device corresponding to the card manufacturer or terminal manufacturer, the method further comprises:
receiving attestation information that corresponds to the terminal and that is from the first node, wherein the attestation information corresponding to the terminal is used to verify the terminal or an attribute corresponding to an identifier of the terminal.

22. The method according to claim 13, wherein the method further comprises:
receiving, by the storage node, sixth information from a second node, wherein the sixth information indicates a fourth identifier of the second node and credential information corresponding to the fourth identifier, the credential information corresponding to the fourth identifier is used to verify the second node and/or an attribute corresponding to the fourth identifier, and the fourth identifier and the credential information corresponding to the fourth identifier are generated by the first node; and
storing, by the storage node, the sixth information.

23. The method according to claim 22, wherein the credential information corresponding to the fourth identifier comprises authentication information corresponding to the fourth identifier and/or attestation information corresponding to the fourth identifier, the authentication information corresponding to the fourth identifier is used to verify the second node, and the attestation information corresponding to the fourth identifier is used to verify the attribute corresponding to the fourth identifier.

24. The method according to claim 22 or 23, wherein the sixth information comprises the fourth identifier and one or more of the following:
the credential information corresponding to the fourth identifier, service information corresponding to the fourth identifier, information indicating a type of the second node, information of an issuer of the fourth identifier, or information indicating a disclosure condition of the credential information corresponding to the fourth identifier.

25. The method according to claim 24, wherein the fourth identifier and the credential information corresponding to the fourth identifier are carried in identification information corresponding to the fourth identifier; or the fourth identifier is carried in identification information corresponding to the fourth identifier, and one or more of the following are carried in profile information corresponding to the fourth identifier: the credential information corresponding to the fourth identifier, the service information corresponding to the fourth identifier, the information indicating the type of the second node, the information of the issuer of the fourth identifier, or the information indicating the disclosure condition of the credential information corresponding to the fourth identifier.

26. The method according to claim 25, wherein the identification information corresponding to the fourth identifier comprises a fourth field and one or both of the following: a fifth field or a sixth field, wherein information carried in the fourth field indicates the fourth identifier, information carried in the fifth field indicates an identifier type of the fourth identifier, and information carried in the sixth field is used to check information carried in a field, other than the sixth field, in the identification information corresponding to the fourth identifier.

27. The method according to any one of claims 1 to 26, wherein
the service information corresponding to the first identifier is used to generate attestation information of a third node and/or authentication information of the third node; and/or
the service information corresponding to the first identifier is used to verify the attestation information of the third node and/or the authentication information of the third node; and/or
the service information corresponding to the first identifier is used to provide one or more of the following services for the third node: a subscription service, a network access service, or a data sharing service, wherein
the third node is different from the first node, credential information of the third node is used to verify the third node, and the attestation information of the third node is used to verify an attribute corresponding to an identifier of the third node.

28. The method according to any one of claims 1 to 27, wherein the first information further indicates credential information corresponding to the first identifier, and the credential information corresponding to the first identifier is used to verify the first node and/or an attribute corresponding to the first identifier.

29. The method according to claim 28, wherein the credential information corresponding to the first identifier comprises authentication information corresponding to the first identifier and/or attestation information corresponding to the first identifier, the authentication information corresponding to the first identifier is used to verify the first node, and the attestation information corresponding to the first identifier is used to verify an attribute corresponding to the first node.

30. The method according to claim 29, wherein the first identifier and the credential information corresponding to the first identifier are carried in identification information corresponding to the first identifier; or the first identifier is carried in identification information corresponding to the first identifier, and one or more of the following are carried in profile information corresponding to the first identifier: the credential information corresponding to the first identifier, the service information corresponding to the first identifier, information indicating the type of the terminal, information of an issuer of the first identifier, or information indicating a disclosure condition of the credential information corresponding to the first identifier.

31. The method according to claim 29 or 30, wherein the attestation information corresponding to the first identifier is generated by a fourth node based on service information corresponding to the fourth node, the attestation information corresponding to the first identifier is signed using a private key corresponding to the fourth node, and the fourth node is different from the first node.

32. The method according to claim 31, wherein the service information corresponding to the fourth node is used to generate service result information, the service result information comprises credential information of a fifth node, the fifth node is different from the fourth node, and the credential information of the fifth node is used to verify the fifth node and/or an attribute corresponding to an identifier of the fifth node.

33. The method according to claim 30, wherein the identification information corresponding to the first identifier is information signed using a private key that corresponds to an identifier of the first node and that is generated by the card manufacturer or the terminal manufacturer.

34. The method according to any one of claims 1 to 33, wherein the first information further comprises one or more of the following: information indicating a type of the first node, the information of the issuer of the first identifier, or the information indicating the disclosure condition of the credential information corresponding to the first identifier.

35. The method according to any one of claims 1 to 34, wherein the storage node is one or more of the following: a blockchain node, a distributed storage node, or a communication device; and the communication device is different from the first node.

36. A communication method, applied to a second node, wherein the method comprises:
obtaining sixth information, wherein the sixth information indicates a fourth identifier of the second node and credential information corresponding to the fourth identifier, the credential information corresponding to the fourth identifier is used to verify the second node and/or an attribute corresponding to the fourth identifier, and the fourth identifier and the credential information corresponding to the fourth identifier are generated by a first node; and
sending the sixth information and/or a hash value of the sixth information to a storage node.

37. The method according to claim 36, wherein the credential information corresponding to the fourth identifier comprises authentication information corresponding to the fourth identifier and/or attestation information corresponding to the fourth identifier, the authentication information corresponding to the fourth identifier is used to verify the second node, and the attestation information corresponding to the fourth identifier is used to verify the attribute corresponding to the fourth identifier.

38. The method according to claim 36 or 37, wherein the sixth information comprises the fourth identifier and one or more of the following: the credential information corresponding to the fourth identifier, service information corresponding to the fourth identifier, information indicating a type of the second node, information of an issuer of the fourth identifier, or information indicating a disclosure condition of the credential information corresponding to the fourth identifier.

39. The method according to any one of claims 36 to 38, wherein the fourth identifier and the credential information corresponding to the fourth identifier are carried in identification information corresponding to the fourth identifier; or the fourth identifier is carried in identification information corresponding to the fourth identifier, and one or more of the following are carried in profile information corresponding to the fourth identifier: the credential information corresponding to the fourth identifier, the service information corresponding to the fourth identifier, the information indicating the type of the second node, the information of the issuer of the fourth identifier, or the information indicating the disclosure condition of the credential information corresponding to the fourth identifier.

40. The method according to claim 39, wherein the identification information corresponding to the fourth identifier comprises the fourth field and one or both of the following: a fifth field or a sixth field, wherein information carried in the fourth field indicates the fourth identifier, information carried in the fifth field indicates an identifier type of the fourth identifier, and information carried in the sixth field is used to check information carried in a field, other than the sixth field, in the identification information corresponding to the fourth identifier.

41. The method according to any one of claims 36 to 40, wherein the storage node is one or more of the following: a blockchain node, a distributed storage node, or a communication device; and the communication device is different from the first node.

42. A communication method, applied to a device corresponding to an operator, wherein the method comprises:
obtaining seventh information, wherein the seventh information indicates a fifth identifier of a terminal and credential information corresponding to the fifth identifier, the credential information corresponding to the fifth identifier is used to verify the terminal and/or an attribute corresponding to the fifth identifier, the fifth identifier is different from a subscription permanent identifier of the terminal in the device corresponding to the operator, the fifth identifier corresponds to the subscription permanent identifier of the terminal, and the subscription permanent identifier is used for communication between the device corresponding to the operator and the terminal; and
sending the seventh information to the terminal.

43. A communication method, applied to a terminal, wherein the method comprises:
receiving seventh information from a device corresponding to an operator, wherein the seventh information indicates a fifth identifier of the terminal and credential information corresponding to the fifth identifier, the credential information corresponding to the fifth identifier is used to verify the terminal and/or an attribute corresponding to the fifth identifier, the fifth identifier is different from a subscription permanent identifier of the terminal, the fifth identifier corresponds to the subscription permanent identifier of the terminal, and the subscription permanent identifier is used for communication between the device corresponding to the operator and the terminal; and
storing the seventh information.

44. The method according to claim 42 or 43, wherein the credential information corresponding to the fifth identifier comprises authentication information corresponding to the fifth identifier and/or attestation information corresponding to the fifth identifier, the authentication information corresponding to the fifth identifier is used to verify the terminal, and the attestation information corresponding to the fifth identifier is used to verify an attribute corresponding to the terminal.

45. The method according to any one of claims 42 to 44, wherein the seventh information comprises the fifth identifier and one or more of the following:
the credential information corresponding to the fifth identifier, the attestation information corresponding to the fifth identifier, information indicating a type of the terminal, information of an issuer of the fifth identifier, or information indicating a disclosure condition of the credential information corresponding to the fifth identifier.

46. The method according to claim 45, wherein the fifth identifier and the credential information corresponding to the fifth identifier are carried in identification information corresponding to the fifth identifier; or the fifth identifier is carried in identification information corresponding to the fifth identifier, and one or more of the following are carried in profile information corresponding to the fifth identifier: the credential information corresponding to the fifth identifier, service information corresponding to the fifth identifier, the information indicating the type of the terminal, the information of the issuer of the fifth identifier, or the information indicating the disclosure condition of the credential information corresponding to the fifth identifier.

47. The method according to claim 46, wherein the identification information corresponding to the fifth identifier comprises a seventh field and one or both of the following: an eighth field or a ninth field, wherein information carried in the seventh field indicates the fifth identifier, information carried in the eighth field indicates an identifier type of the fifth identifier, and information carried in the ninth field is used to check information carried in a field, other than the ninth field, in the identification information corresponding to the fifth identifier.

48. A communication method, applied to a device corresponding to a card manufacturer or terminal manufacturer, wherein the method comprises:
obtaining eighth information and ninth information, wherein the eighth information comprises a seventh identifier indicating the device corresponding to the card manufacturer or terminal manufacturer, and credential information corresponding to the seventh identifier; the credential information corresponding to the seventh identifier is used to verify the device corresponding to the card manufacturer or terminal manufacturer and/or an attribute corresponding to the seventh identifier; the ninth information indicates an eighth identifier of a terminal and credential information corresponding to the eighth identifier; the credential information corresponding to the eighth identifier is used to verify the terminal and/or an attribute corresponding to the eighth identifier; and the eighth identifier and the credential information corresponding to the eighth identifier are generated by the device corresponding to the card manufacturer or terminal manufacturer; and
sending the eighth information and the ninth information to a storage node.

49. The method according to claim 48, wherein the method further comprises:
sending the ninth information to the terminal.

50. A communication method, applied to a storage node, wherein the method comprises:
receiving eighth information and ninth information, wherein the eighth information comprises a seventh identifier indicating a device corresponding to a card manufacturer or terminal manufacturer, and credential information corresponding to the seventh identifier; the credential information corresponding to the seventh identifier is used to verify the device corresponding to the card manufacturer or terminal manufacturer and/or an attribute corresponding to the seventh identifier; the ninth information indicates an eighth identifier of a terminal and credential information corresponding to the eighth identifier; the credential information corresponding to the eighth identifier is used to verify the terminal and/or an attribute corresponding to the eighth identifier; and the eighth identifier and the credential information corresponding to the eighth identifier are generated by the device corresponding to the card manufacturer or terminal manufacturer; and
storing the eighth information and the ninth information.

51. The method according to claim 50, wherein receiving the eighth information and the ninth information comprises:
receiving the eighth information and the ninth information from the device corresponding to the card manufacturer or terminal manufacturer.

52. The method according to claim 50, wherein receiving the eighth information and the ninth information comprises:
receiving the eighth information from the device corresponding to the card manufacturer or terminal manufacturer, and receiving the ninth information from the terminal.

53. A communication apparatus, wherein the communication apparatus is configured to perform the communication method according to any one of claims 1 to 52.

54. A communication apparatus, comprising a processor, wherein the processor is configured to perform the communication method according to any one of claims 1 to 52.

55. A communication apparatus, comprising a processor, wherein the processor is coupled to a memory; and
the processor is configured to execute a computer program stored in the memory, so that the communication apparatus performs the communication method according to any one of claims 1 to 52.

56. A communication apparatus, comprising a processor and an interface circuit, wherein
the interface circuit is configured to: receive code instructions and transmit the code instructions to the processor; and
the processor is configured to run the code instructions to perform the method according to any one of claims 1 to 52.

57. A communication apparatus, wherein the communication apparatus comprises a processor and a transceiver, the transceiver is configured to exchange information between the communication apparatus and another communication apparatus, and the processor executes program instructions, to perform the communication method according to any one of claims 1 to 52.

58. A communication system, wherein the communication system comprises one or more terminal devices and one or more network devices.

59. A computer-readable storage medium, wherein the computer-readable storage medium comprises a computer program or instructions, and when the computer program or the instructions are run on a computer, the computer is enabled to perform the communication method according to any one of claims 1 to 52.

60. A computer program product, wherein the computer program product comprises a computer program or instructions, and when the computer program or the instructions are run on a computer, the computer is enabled to perform the communication method according to any one of claims 1 to 52.
